# EUROPÄISCHE PATENTSCHRIFT

(11) **EP 4 059 204 B1**
(45) Veröffentlichungstag und Bekanntmachung des Hinweises auf die Patenterteilung: **20.12.2023**
(21) Anmeldenummer: 20845390.2
(22) Anmeldetag: 10.11.2020
(51) Int. Cl.: H04L 9/40, H04L 9/08, G09C 1/00

(54) **VORRICHTUNGEN, SYSTEM, VERFAHREN UND COMPUTERPROGRAMM ZUR HARDWARE-BASIERTEN DATENVERSCHLÜSSELUNG MIT IMPEDANZSCHALTER**
APPARATUSES, SYSTEM, METHODS AND COMPUTER PROGRAM FOR HARDWARE-BASED DATA ENCRYPTION WITH AN IMPEDANCE SWITCH
DISPOSITIFS, SYSTÈME, PROCÉDÉS ET PROGRAMME D'ORDINATEUR POUR LE CRYPTAGE DE DONNÉES FONDÉ SUR LE MATÉRIEL AVEC COMMUTATEUR À IMPÉDANCE

(30) Priorität: 11.11.2019 DE 102019217397; 20.12.2019 DE 102019220464
(43) Veröffentlichungstag der Anmeldung: 21.09.2022
(73) Patentinhaber: Fraunhofer-Gesellschaft zur Förderung der angewandten Forschung e.V., 80686 München (DE)
(72) Erfinder: DU, Nan, 09126 Chemnitz (DE); SCHMIDT, Heidemarie, 09126 Chemnitz (DE); ECKE, Ramona, 09126 Chemnitz (DE); SCHULZ, Stefan, 09126 Chemnitz (DE)
(74) Vertreter: Schairer, Oliver Michael
(86) Internationale Anmeldenummer: PCT/EP2020/081589
(87) Internationale Veröffentlichungsnummer: WO 2021/094287

(56) Entgegenhaltungen:
- US-A1- 2015 364 682
- Der: "Beyond "More than Moore": Novel applications of BiFeO 3 (BFO)-based nonvolatile resistive switches Neuartige Anwendungen des BiFeO 3 (BFO)-basierten nichtflüchtigen Widerstandsschaltern", , 25. August 2015 (2015-08-25), XP055382807, Gefunden im Internet: URL:http://www.qucosa.de/fileadmin/data/qu cosa/documents/20250/Dissertation_Nan_Du.p df [gefunden am 2017-06-19]
- DU NAN ET AL: "Novel implementation of memristive systems for data encryption and obfuscation", JOURNAL OF APPLIED PHYSICS, AMERICAN INSTITUTE OF PHYSICS, US, Bd. 115, Nr. 12, 28. März 2014 (2014-03-28), XP012183617, ISSN: 0021-8979, DOI: 10.1063/1.4869262 [gefunden am 1901-01-01]

## Beschreibung

Die Anmeldung betrifft die hardware-basierte Verschlüsselung von Daten mit einer elektronischen Schaltung, und, im Speziellen, eine Vorrichtung und ein Verfahren zur hardware-basierten Datenverschlüsselung mit Impedanzschalter, wobei die Schaltung dabei beispielsweise ausgelegt sein kann, mindestens einen nichtflüchtigen, rekonfigurierbaren Schalter und mindestens eines der elektronischen Bauelemente Widerstand, Induktivität oder Kapazität zu umfassen. Ferner betrifft die Anmeldung den Aufbau der elektronischen Schaltung und ein Verfahren zur Verschlüsselung der Daten.

In der zunehmend digitalisierten und vernetzten Welt stellt die gezielte Nutzung von modernen Informations- und Kommunikationstechnologien den entscheidenden Schlüssel zum wirtschaftlichen Erfolg dar. Rasant wachsende Datenmengen (2018: 1,6 Zettabyte (1,6·10²¹ Byte) [Cisco2014]) müssen für eine sichere Dateninfrastruktur verschlüsselt werden.

Digitale Verschlüsselungstechnologien bieten eine gute Möglichkeit, Daten zu schützen. Die Software-basierte Verschlüsselung ist bisher die Standardlösung zur Datenverschlüsselung. Derzeit können mit Hilfe von Softwareprogrammen einzelne Dateien oder Ordner oder gleich die gesamte Festplatte (im Rahmen einer Vollverschlüsslung; englisch: Full Disk Encryption) verschlüsselt werden. Dafür ist bereits eine Vielzahl von Softwarelösungen verschiedener Anbieter am Markt verfügbar. Nachteile einer software-basierten Vollverschlüsselung sind jedoch ein beträchtlicher Zeit- und Rechenaufwand und der damit verbundene erhöhte Energieverbrauch. Eine software-basierte Methode ist bei den erwartungsgemäß rasant wachsenden Datenmengen, die verarbeitet werden müssen, in Zukunft nicht mehr praktikabel.

Hardware-basierte Verschlüsselung löst Probleme der software-basierten Verschlüsselung und ermöglicht den Einsatz neuartiger Verschlüsselungskonzepte und Protokolle.

Bei der hardware-basierten Kryptographie werden durch die Hardwarekomponenten (Verschlüsselungshardware) die Daten oder ausgetauschten Signale ohne den Einsatz von zusätzlicher Software direkt auf dem Datenträger in Echtzeit verschlüsselt und so vor unerwünschten Einblicken geschützt. Geht das Speichermedium physisch verloren, sind die gespeicherten Daten trotzdem sicher. Im Echtzeitbetrieb sind durch die Nutzung von Hardwarekryptographie zudem größere Schlüssellängen als bisher möglich. Hardwareverschlüsselung bietet also erhebliche Sicherheitsvorteile und reduziert zugleich die Systembelastung, da keine Rechenleistung des Prozessors für die Verschlüsselung aufgewendet werden muss.

Eine bekannte Lösung zum Ablegen von Schlüsseln für kryptographische Anwendungen ist die sogenannte physical unclonable function (deutsch: physikalisch unklonbare Funktion; Abkürzung: PUF).

Wie ein Fingerabdruck ist die PUF ein individuelles Merkmal, welches an ein physikalisches Objekt (Verschlüsselungshardware) gebunden ist. Heutzutage werden PUFs zum Identifizieren von Bauteilen integrierter Schaltungen oder als Ersatz für das Speichern von Schlüsseln für kryptographische Anwendungen eingesetzt. Die Herausforderung beim Realisieren einer PUF ist es, ein physikalisches Objekt (Verschlüsselungshardware) zu finden, welches ein unvorhersagbares, individuelles Merkmal aufweist.

Aufgrund des stochastischen Verhaltens von Memristoren, sind Memristoren ideale potentielle Kandidaten zur Realisierung einer Verschlüsselungshardware. Memristoren sind neuartige mikroelektronische Bauelemente, deren elektrischer Widerstand in Abhängigkeit vom Stromfluss gezielt eingestellt werden kann und dann ohne anliegende äußere Spannung nichtflüchtig erhalten bleibt - daher das Kunstwort aus Memory (Gedächtnis) und Resistor (Widerstand). Es wird erwartet, dass Memristoren aufgrund ihres nichtflüchtigen Verhaltens nicht anfällig gegenüber Rauschen und Umwelteinflüssen sind. Gleichzeitig hängen die individuellen Merkmale von Memristoren jedoch stark und unkontrollierbar vom Herstellungsprozess ab und sind damit unvorhersagbar.

Für PUFs in verschiedenen Anwendungen wurden bereits verschiedene Protokolle entwickelt. So eröffnet die BiFeO₃ (BFO)-Plattform (BFO/ BiFeO₃ = Bismut-Eisenoxid) aufgrund der memristiven Eigenschaften von BFO die Möglichkeit zur Nutzung der BFO-Plattform als PUF in der hardware-basierten Kryptographie. Beispielsweise beschreibt ein Protokoll, wie die nichtflüchtige, nichtlineare Widerstandsänderung von BFO-Memristoren für die Erzeugung von höheren Harmonischen, mit deren Hilfe man digitale Datensätze auf einfache Art chiffrieren und dechiffrieren kann [US 9,812,640 B2], [Du2014], verwendet werden wird. Diese höheren Harmonischen können drahtlos (englisch: wireless) an den Empfänger übertragen werden und vom Empfänger wieder mit einer hardware-basierten Kryptographie dekodiert werden. Die Minimierung der Autokorrelation dieser höheren Harmonischen wurde grundsätzlich mittels einer BFO-basierten Kryptographie gezeigt [Du2014].

Der übertragene Datensatz kann nur dekodiert werden, wenn der identische BFO-Memristor und der identische Zufallszahlgenerator sowie die identische Kryptographie-Schaltung zur Verfügung steht, welche der Sender zum Verschlüsseln der Daten verwendet hat. Es wurde darüberhinaus gezeigt, wie der BFO-basierte Memristor zum Schutz personenbezogener Daten in der Medizin [Ascoli2016] verwendet werden kann.

Die Eigenschaft des Protokolls, dass der übertragene Datensatz nur dekodiert wird, wenn der identische BFO-Memristor und der identische Zufallszahlgenerator sowie die identische Kryptographie-Schaltung zur Verfügung steht, welche der Sender zum Verschlüssein der Daten verwendet hat, stellt eine Sicherheitslücke dar. Diese Sicherheitslücke konnte bisher nicht geschlossen werden.

Der: "Beyond "More than Moore": Novel 1-20 applications of BiFeO 3 (BFO)-based non-volatile resistive switches Neuartige Anwendungen des BiFeO 3 (BFO)-basierten nichtflüchtigen Widerstandsschaltern", 25. August 2015 (2015-08-25), XP055382807, URL: https://nbn-resolving.org/urn:nbn:de:bsz:ch1-qucosa-202508 zeigt ein Verfahren zur Enkodierung einer binären Datensequenz unter Verwendung von BFO Memristoren.

US 2015/364682 A1 zeigt einen komplementären Widerstandsschalter mit zwei äußeren Kontakten, zwischen denen sich zwei piezo- oder ferroelektrische Schichten mit einem inneren gemeinsamen Kontakt befinden, und ein Verfahren und Schaltungen zum Verschlüsseln und Entschlüsseln einer Bitfolge.

DU NAN ET AL: "Novel implementation of memristive systems for data encryption and obfuscation", JOURNAL OF APPLIED PHYSICS, AMERICAN INSTITUTE OF PHYSICS, US, Bd. 115, Nr. 12, 28. März 2014 (2014-03-28) zeigt BiFeO₃ Memristoren zur Datenverschlüsselung und Datenverschleierung.

Aufgabe der Erfindung ist es also, Konzepte zur verbesserten Verschlüsselung bereitzustellen.

Die Aufgabe wird gelöst durch den Gegenstand der unabhängigen Patentansprüche.

Ein Dekodierer zur Dekodierung, um eine binäre Datensequenz zu erhalten, wird bereitgestellt. Der Dekodierer umfasst ein erstes Induktivitätselement, ein erstes Zustands-Element, ein zweites Induktivitätselement, ein zweites Zustands-Element, einen Induktivitätssequenzgenerator, eine erste Vergleichseinheit und eine zweite Vergleichseinheit. Der Induktivitätssequenzgenerator ist ausgebildet, eine Induktivitäts-Sequenz umfassend eine Mehrzahl von Induktivitätswerten zu erzeugen und jeden Induktivitätswert der Mehrzahl von Induktivitätswerten der Induktivitätssequenz an dem ersten Induktivitätselement einzustellen und an dem zweiten Induktivitätselement einzustellen. Die erste Vergleichseinheit ist ausgebildet, einen ersten Vergleich durchzuführen, der von einem empfangenen Impedanzwert abhängt und von einer Impedanz abhängt, die das erste Zustands-Element aufweist, wenn der aktuelle Induktivitätswert an dem ersten Induktivitätselement eingestellt wurde. Die zweite Vergleichseinheit ist ausgebildet, einen zweiten Vergleich durchzuführen, der von dem empfangenen Impedanzwert abhängt und von einer Impedanz abhängt, die das zweite Zustands-Element aufweist, wenn der aktuelle Induktivitätswert an dem zweiten Induktivitätselement eingestellt wurde.

Speziell wird ein Dekodierer zur Dekodierung bereitgestellt, um eine binäre Datensequenz zu erhalten.

Der Dekodierer umfasst ein erstes Induktivitätselement, das eine Induktivität aufweist, die einstellbar ist.

Des Weiteren umfasst der Dekodierer ein erstes Zustands-Element, das ausgebildet ist, wenn das erste Induktivitätselement eine Induktivität mit einem ersten Induktivitätswert aufweist, eine erste Impedanz aufzuweisen, und, wenn das erste Induktivitätselement eine Induktivität mit einem zweiten Induktivitätswert aufweist, der von dem ersten Induktivitätswert verschieden ist, eine zweite Impedanz aufzuweisen, die von der ersten Impedanz verschieden ist.

Ferner umfasst der Dekodierer ein zweites Induktivitätselement, das eine Induktivität aufweist, die einstellbar ist.

Des Weiteren umfasst der Dekodierer ein zweites Zustands-Element, das ausgebildet ist, wenn das zweite Induktivitätselement eine Induktivität mit dem ersten Induktivitätswert aufweist, eine dritte Impedanz aufzuweisen, die von der ersten Impedanz verschieden ist, und, wenn das zweite Induktivitätselement eine Induktivität mit dem zweiten Induktivitätswert aufweist, eine vierte Impedanz aufzuweisen, die von der zweiten Impedanz und von der dritten Impedanz verschieden ist.

Ferner umfasst der Dekodierer einen Induktivitätssequenzgenerator, der ausgebildet ist, eine Induktivitäts-Sequenz umfassend eine Mehrzahl von Induktivitätswerten zu erzeugen und jeden Induktivitätswert der Mehrzahl von Induktivitätswerten der Induktivitätssequenz an dem ersten Induktivitätselement einzustellen und an dem zweiten Induktivitätselement einzustellen.

Des Weiteren umfasst der Dekodierer eine erste Vergleichseinheit, die ausgebildet ist, einen ersten Vergleich durchzuführen, nachdem ein aktueller Induktivitätswert der Mehrzahl von Induktivitätswerten der Induktivitätssequenz an dem ersten Induktivitätselement eingestellt wurde, wobei der erste Vergleich von einem empfangenen Impedanzwert abhängt und von einer Impedanz abhängt, die das erste Zustands-Element aufweist, wenn der aktuelle Induktivitätswert an dem ersten Induktivitätselement eingestellt wurde,

Ferner umfasst der Dekodierer eine zweite Vergleichseinheit, die ausgebildet ist, einen zweiten Vergleich durchzuführen, nachdem der aktuelle Induktivitätswert der Mehrzahl von Induktivitätswerten der Induktivitätssequenz an dem zweiten Induktivitätselement eingestellt wurde, wobei der zweite Vergleich von dem empfangenen Impedanzwert abhängt und von einer Impedanz abhängt, die das zweite Zustands-Element aufweist, wenn der aktuelle Induktivitätswert an dem zweiten Induktivitätselement eingestellt wurde.

Der Dekodierer ist ausgebildet, als Ergebnis der Auswertung des empfangenen Impedanzwertes keinen Binärwert der binären Datensequenz auszugeben, wenn sich aus dem empfangenen Impedanzwert ergibt, dass mit dem empfangenen Impedanzwert kein Binärwert der binären Datensequenz kodiert wird.

Des Weiteren ist der Dekodierer ausgebildet, wenn sich aus dem empfangenen Impedanzwert ergibt, dass mit dem empfangenen Impedanzwert ein Binärwert der binären Datensequenz kodiert wird, als Ergebnis der Auswertung des empfangenen Impedanzwertes einen ersten binären Wert als einen Binärwert der binären Datensequenz auszugeben, wenn der erste Vergleich eine Übereinstimmung liefert.

Ferner ist der Dekodierer ausgebildet, wenn sich aus dem empfangenen Impedanzwert ergibt, dass mit dem empfangenen Impedanzwert ein Binärwert der binären Datensequenz kodiert wird, als das Ergebnis der Auswertung des empfangenen Impedanzwertes einen zweiten binären Wert als den besagten einen Binärwert der binären Datensequenz auszugeben, der von dem ersten binären Wert verschieden ist, wenn der erste Vergleich keine Übereinstimmung liefert, wenn aber der zweite Vergleich eine Übereinstimmung liefert.

Des Weiteren wird ein Enkodierer zur Enkodierung einer binären Datensequenz bereitgestellt.

Der Enkodierer umfasst ein Induktivitätselement das eine Induktivität aufweist, die einstellbar ist.

Ferner umfasst der Enkodierer umschaltbares Element, das ausgebildet ist, in einen ersten Zustand oder in einen zweiten Zustand geschaltet zu werden, wobei, wenn das Induktivitätselement eine Induktivität mit einem ersten Induktivitätswert aufweist, das umschaltbare Element eine erste Impedanz aufweist, wenn das umschaltbare Element in den ersten Zustand geschaltet ist, und wobei, wenn das Induktivitätselement die Induktivität mit dem ersten Induktivitätswert aufweist, das umschaltbare Element eine zweite Impedanz aufweist, die von der ersten Impedanz verschieden ist, wenn das umschaltbare Element in den zweiten Zustand geschaltet ist.

Des Weiteren umfasst der Enkodierer einen Induktivitätssequenzgenerator, der ausgebildet ist, eine Induktivitäts-Sequenz umfassend eine Mehrzahl von Induktivitätswerten zu erzeugen und jeden Induktivitätswert der Mehrzahl von Induktivitätswerten der Induktivitätssequenz an dem Induktivitätselement einzustellen.

Ferner umfasst der Enkodierer eine Ansteuereinheit.

Die Ansteuereinheit ist ausgebildet, wenn die Impedanz, die das umschaltbare Element aufweist, innerhalb eines vordefinierten Impedanzbereichs liegt, nachdem einer der Induktivitätswerte der Mehrzahl von Induktivitätswerten der Induktivitätssequenz eingestellt wurde, das umschaltbare Element abhängig von einem Binärwert der binären Datensequenz in den ersten Zustand oder den zweiten Zustand zu schalten.

Des Weiteren ist die Ansteuereinheit ausgebildet, das umschaltbare Element nicht zu schalten und in dem ersten oder zweiten Zustand zu belassen, wenn die Impedanz, die das umschaltbare Element aufweist, innerhalb des vordefinierten Impedanzbereichs liegt, nachdem der eine der Induktivitätswerte der Mehrzahl von Induktivitätswerten der Induktivitätssequenz eingestellt wurde.

Ferner wird ein System bereitgestellt. Das System umfasst den oben beschriebenen Enkodierer und den oben beschriebenen Dekodierer. Der Enkodierer ist ausgebildet, eine binärer Datensequenz zu enkodieren und in enkodierter Form an den Dekodierer zu übermitteln. Der Dekodierer ist ausgebildet, die enkodierte Form der binären Datensequenz zu dekodieren, um die binäre Datensequenz zu dekodieren.

Des Weiteren wird ein Verfahren zur Dekodierung bereitgestellt, um eine binäre Datensequenz zu erhalten. Das Verfahren umfasst:
- Erzeugung einer Induktivitäts-Sequenz umfassend eine Mehrzahl von Induktivitätswerten durch einen Induktivitätssequenzgenerator.
- Einstellung jedes Induktivitätswertes der Mehrzahl von Induktivitätswerten der Induktivitätssequenz an einem ersten Induktivitätselement und an einem zweiten Induktivitätselement einzustellen, wobei das erste Induktivitätselement eine Induktivität aufweist, die einstellbar ist, und wobei das zweite Induktivitätselement eine Induktivität aufweist, die einstellbar ist.
- Durchführen eines ersten Vergleichs durch eine erste Vergleichseinheit, nachdem ein aktueller Induktivitätswert der Mehrzahl von Induktivitätswerten der Induktivitätssequenz an dem ersten Induktivitätselement eingestellt wurde, wobei der erste Vergleich von einem empfangenen Impedanzwert abhängt und von einer Impedanz abhängt, die ein erstes Zustands-Element aufweist, wenn der aktuelle Induktivitätswert an dem ersten Induktivitätselement eingestellt wurde.
- Durchführen eines zweiten Vergleichs durch eine zweite Vergleichseinheit, nachdem der aktuelle Induktivitätswert der Mehrzahl von Induktivitätswerten der Induktivitätssequenz an dem zweiten Induktivitätselement eingestellt wurde, wobei der zweite Vergleich von dem empfangenen Impedanzwert abhängt und von einer Impedanz abhängt, die ein zweites Zustands-Element aufweist, wenn der aktuelle Induktivitätswert an dem zweiten Induktivitätselement eingestellt wurde.
- Als Ergebnis der Auswertung des empfangenen Impedanzwertes, kein Ausgeben eines Binärwerts der binären Datensequenz, wenn sich aus dem empfangenen Impedanzwert ergibt, dass mit dem empfangenen Impedanzwert kein Binärwert der binären Datensequenz kodiert wird.
- Wenn sich aus dem empfangenen Impedanzwert ergibt, dass mit dem empfangenen Impedanzwert ein Binärwert der binären Datensequenz kodiert wird, als Ergebnis der Auswertung des empfangenen Impedanzwertes, Ausgeben eines ersten binären Werts als einen Binärwert der binären Datensequenz, wenn der erste Vergleich eine Übereinstimmung liefert. Und:
- Wenn sich aus dem empfangenen Impedanzwert ergibt, dass mit dem empfangenen Impedanzwert ein Binärwert der binären Datensequenz kodiert wird, als das Ergebnis der Auswertung des empfangenen Impedanzwertes, Ausgeben eines zweiten binären Werts als den besagten einen Binärwert der binären Datensequenz, der von dem ersten binären Wert verschieden ist, wenn der erste Vergleich keine Übereinstimmung liefert, wenn aber der zweite Vergleich eine Übereinstimmung liefert.

Dabei ist das erste Zustands-Element ausgebildet, wenn das erste Induktivitätselement eine Induktivität mit einem ersten Induktivitätswert aufweist, eine erste Impedanz aufzuweisen, und, wenn das erste Induktivitätselement eine Induktivität mit einem zweiten Induktivitätswert aufweist, der von dem ersten Induktivitätswert verschieden ist, eine zweite Impedanz aufzuweisen, die von der ersten Impedanz verschieden ist. Des Weiteren ist das zweite Zustands-Element ausgebildet, wenn das zweite Induktivitätselement eine Induktivität mit dem ersten Induktivitätswert aufweist, eine dritte Impedanz aufzuweisen, die von der ersten Impedanz verschieden ist, und, wenn das zweite Induktivitätselement eine Induktivität mit dem zweiten Induktivitätswert aufweist, eine vierte Impedanz aufzuweisen, die von der zweiten Impedanz und von der dritten Impedanz verschieden ist.

Ferner wird ein Verfahren zur Enkodierung einer binären Datensequenz bereitgestellt. Das Verfahren umfasst:
- Erzeugen einer Induktivitäts-Sequenz umfassend eine Mehrzahl von Induktivitätswerten durch einen Induktivitätssequenzgenerator.
- Einstellen jedes Induktivitätswerts der Mehrzahl von Induktivitätswerten der Induktivitätssequenz an einem Induktivitätselement, wobei das Induktivitätselement das eine Induktivität aufweist, die einstellbar ist, wobei, wenn das Induktivitätselement eine Induktivität mit einem ersten Induktivitätswert aufweist, ein umschaltbares Element eine erste Impedanz aufweist, wenn das umschaltbare Element in einen ersten Zustand geschaltet ist, und wobei, wenn das Induktivitätselement die Induktivität mit dem ersten Induktivitätswert aufweist, das umschaltbare Element eine zweite Impedanz aufweist, die von der ersten Impedanz verschieden ist, wenn das umschaltbare Element in einen zweiten Zustand geschaltet ist.

Dabei wird, wenn die Impedanz, die ein umschaltbare Element aufweist, innerhalb eines vordefinierten Impedanzbereichs liegt, nachdem einer der Induktivitätswerte der Mehrzahl von Induktivitätswerten der Induktivitätssequenz eingestellt wurde, das umschaltbare Element von der Ansteuereinheit abhängig von einem Binärwert der binären Datensequenz in den ersten Zustand oder in den zweiten Zustand geschaltet. Ferner wird das umschaltbare Element von der Ansteuereinheit nicht geschaltet und wird in dem ersten oder in dem zweiten Zustand belassen, wenn die Impedanz, die das umschaltbare Element aufweist, innerhalb des vordefinierten Impedanzbereichs liegt, nachdem der eine der Induktivitätswerte der Mehrzahl von Induktivitätswerten der Induktivitätssequenz eingestellt wurde.

Des Weiteren wird ein Verfahren zur Dekodierung und Enkodierung bereitgestellt. Das Verfahren umfasst das oben beschriebene Verfahren zur Enkodierung und das oben beschriebene Verfahren zur Dekodierung. Eine binärer Datensequenz wird dem Verfahren zur Enkodierung enkodiert, um eine enkodierte Form der binären Datensequenz zu erhalten. Ferner wird die enkodierte Form der binären Datensequenz gemäß dem Verfahren zur Dekodierung dekodiert, um die binäre Datensequenz zu dekodieren.

Ferner werden Computerprogramme jeweils mit einem Programmcode zur Durchführung eines der oben beschriebenen Verfahren bereitgestellt.

Bevorzugte Ausführungsformen finden sich in den abhängigen Ansprüchen.

Nachfolgend werden bevorzugte Ausführungsformen der Erfindung unter Bezugnahme auf die Zeichnungen beschrieben.

In den Zeichnungen ist dargestellt:
- Fig. 1: zeigt einen Enkodierer gemäß einer Ausführungsform.
- Fig. 2: zeigt einen Enkodierer gemäß einer weiteren Ausführungsform.
- Fig. 3: zeigt einen Dekodierer gemäß einer Ausführungsform.
- Fig. 4: zeigt einen Dekodierer gemäß einer weiteren Ausführungsform.
- Fig. 5: zeigt ein System gemäß einer Ausführungsform, das ein Memimpedancebasiertes Quellenkodierungs- und Dekodierungssystem gemäß einer Ausführungsform darstellt.
- Fig. 6: zeigt einen Messschaltkreis der eine Memimpedance und eine externe Induktivität aufweist.
- Fig. 7: zeigt die Impedanz und Theta θ gemessen im LRS Zustand.
- Fig. 8: zeigt die Impedanz und Theta θ gemessen im HRS Zustand.
- Fig. 9: zeigt die Impedanz im LRS-Zustand und im HRS-Zustand mit externen Induktivitäten.
- Fig. 10: zeigt die Impedanz im LRS Zustand und im HRS Zustand mit externen Induktivitäten, wobei die interpolierten 10 mH Datenpunkte gekennzeichnet sind.
- Fig. 11: zeigt die Impedanzdaten für unterschiedliche Induktivitäten bei 1.314 MHz.
- Fig. 12: zeigt eine Abbildung von Binärdaten im LRS Zustand und im HRS Zustand für unterschiedliche Induktivitäten bei 1.314 MHz.
- Fig. 13: zeigt die Impedanzdaten für unterschiedliche Induktivitäten bei 100 kHz.
- Fig. 14: zeigt die Impedanzdaten für unterschiedliche Induktivitäten bei 100 kHz.

Ausführungsformen beschreiben eine memristor-basierte Datenverschlüsselung mit einer neuen Verschlüsselungshardware in einer elektronischen Schaltung zur Realisierung eines Protokolls, bei dem ein Zufallsgenerator zur Datenverschlüsselung und derselbe Zufallsgenerator zur Datenentschlüsselung verwendet wird.

Ausführungsformen stellen eine neue elektronische Schaltung mit einer mempedancebasierten PUF bereit, mit der Daten stochastisch verschlüsselt und deterministisch entschlüsselt werden. Im Vergleich zu existierenden elektronischen Schaltungen mit einer memristor-basierten PUF im Stand der Technik, mit der Daten stochastisch verschlüsselt und deterministisch entschlüsselt werden, hat die mempedance-basierte PUF den Vorteil, dass die Leistungsaufnahme bei der Datenverschlüsselung mit der mempedancebasierten PUF wesentlich geringer ist als mit der memristor-basierten PUF.

Des Weiteren stellen Ausführungsformen ein Protokoll bereit, das beschreibt, wie die nichtflüchtige, nichtlineare Impedanzänderung von YMnO3(YMO)-Memristoren für die Erzeugung von komplexen Impedanzdaten, mit deren Hilfe man digitale Datensätze auf einfache Art chiffrieren und dechiffrieren kann, verwendet.

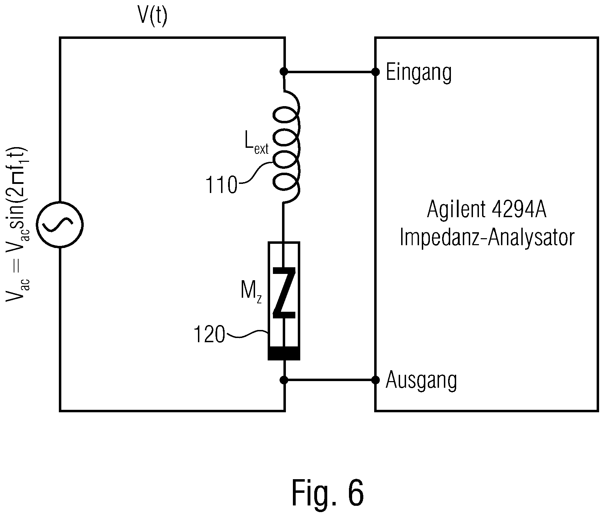

Darüber hinaus wird eine elektronische Schaltung (Fig. 6) mit einem Mempedance Mz bereitgestellt, welche eine Impedanzänderung nach Anlegen eines Schreibspannungspulses zeigt, und einem elektronischen Bauelement L, welches eine Induktivität aufweist.

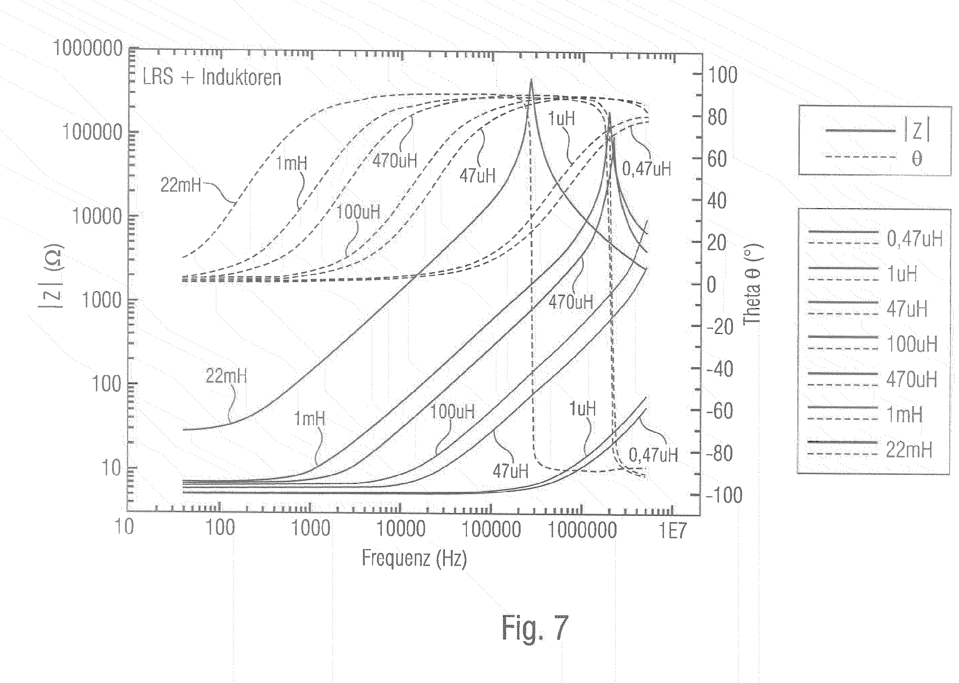

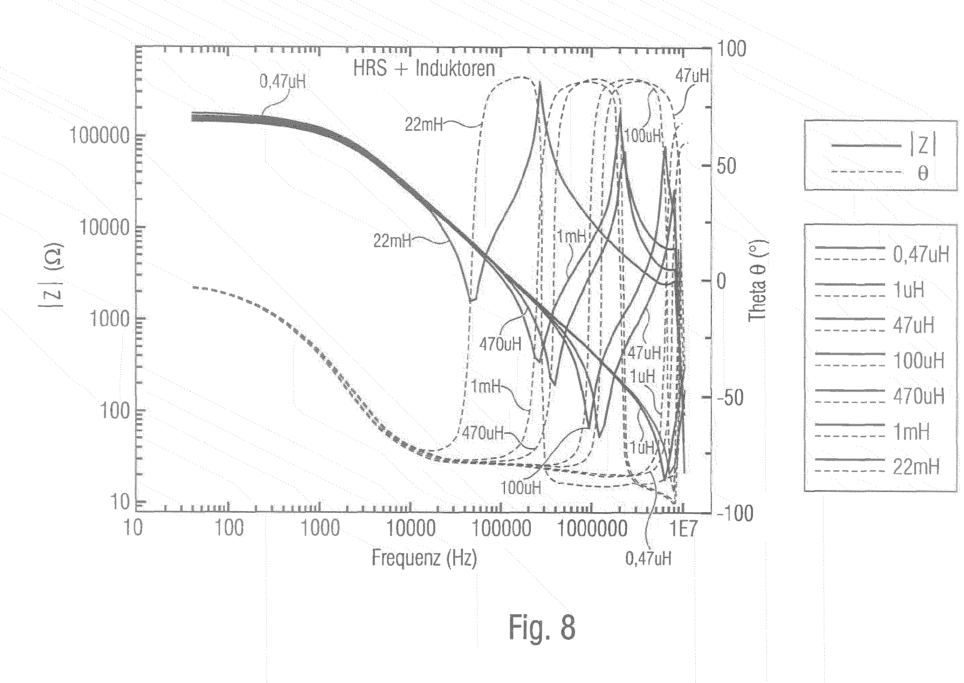

Die Impedanzdaten (|Z|, Theta θ) der elektronischen Schaltung hängen davon ab, ob sich die Mempedance MZ in einem Zustand mit geringem Widerstand (LRS, low resistance state) (Fig. 7) und mit dominierend induktivem Anteil oder in einem Zustand mit einem hohen Widerstand (HRS, high resistance state) und mit dominierend kapazitivem Anteil (Fig. 8) befindet.

Sowohl im LRS (Fig. 7) als auch im HRS (Fig. 8) verschiebt sich die Resonanzfrequenz mit zunehmender Induktivität des elektronischen Bauelementes L zu niedrigen Frequenzen.

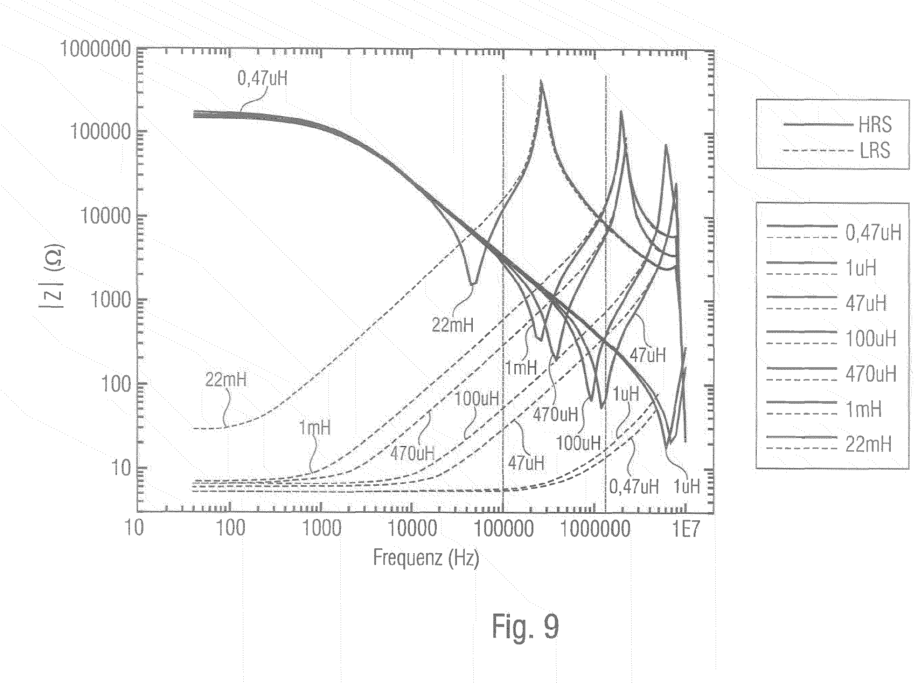

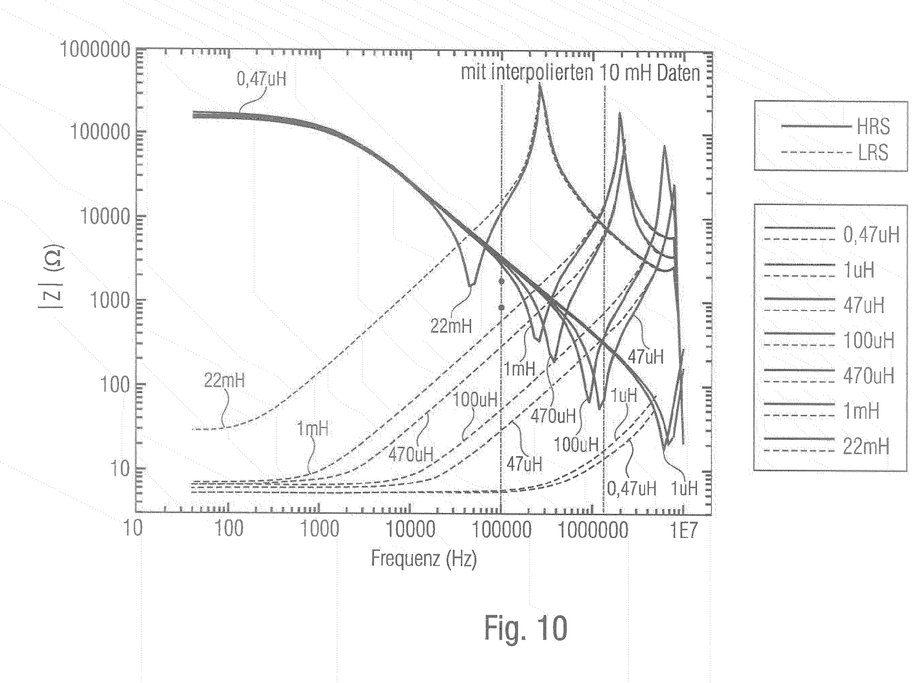

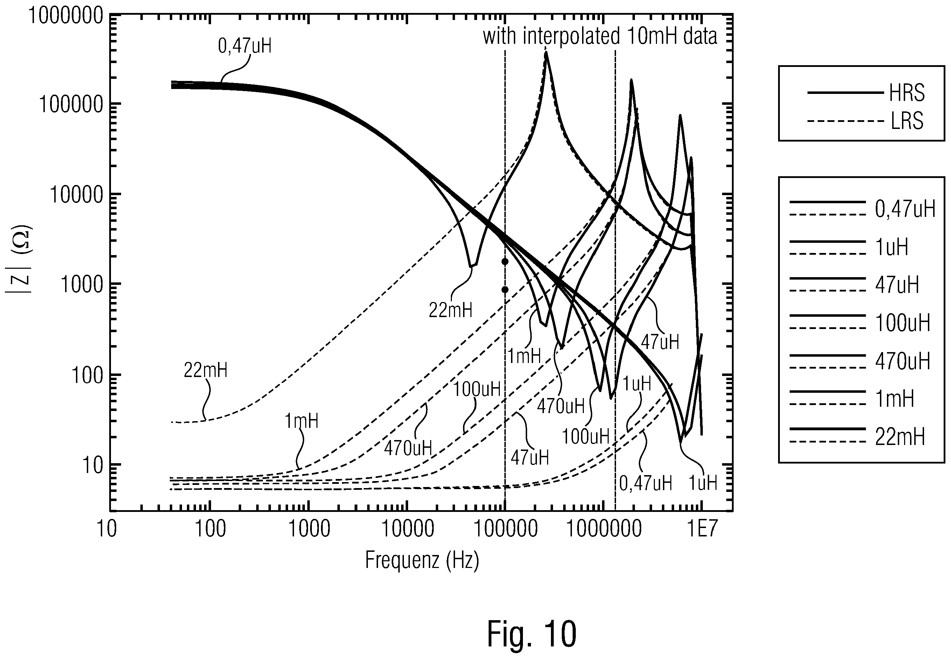

Die Impedanz-Daten der elektronischen Schaltung (Fig. 6) mit der YMO-Mempedance im LRS und HRS unterscheiden sich signifikant im Frequenzbereich unterhalb der Resonanzfrequenz, wie das für |Z| in Fig. 9 und Fig. 10 gezeigt ist.

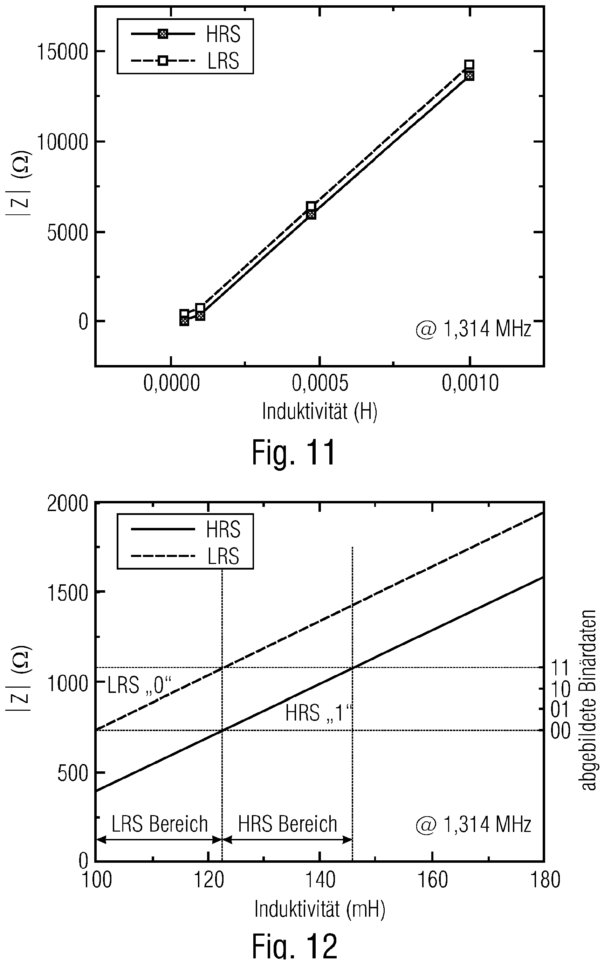

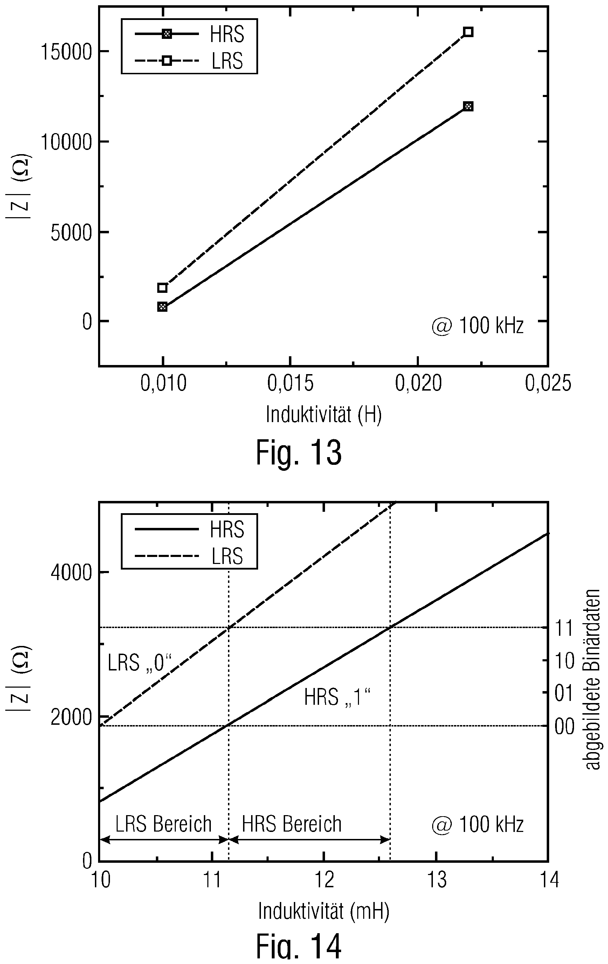

Beispielhaft kann man die Frequenz 1.314 MHz (Fig. 12) und 100 kHz (Fig. 14) betrachten und zeigen, dass |Z| linear mit der Induktivität L des elektronischen Bauelementes wächst (Fig. 11, Fig. 12, Fig. 13, Fig. 14).

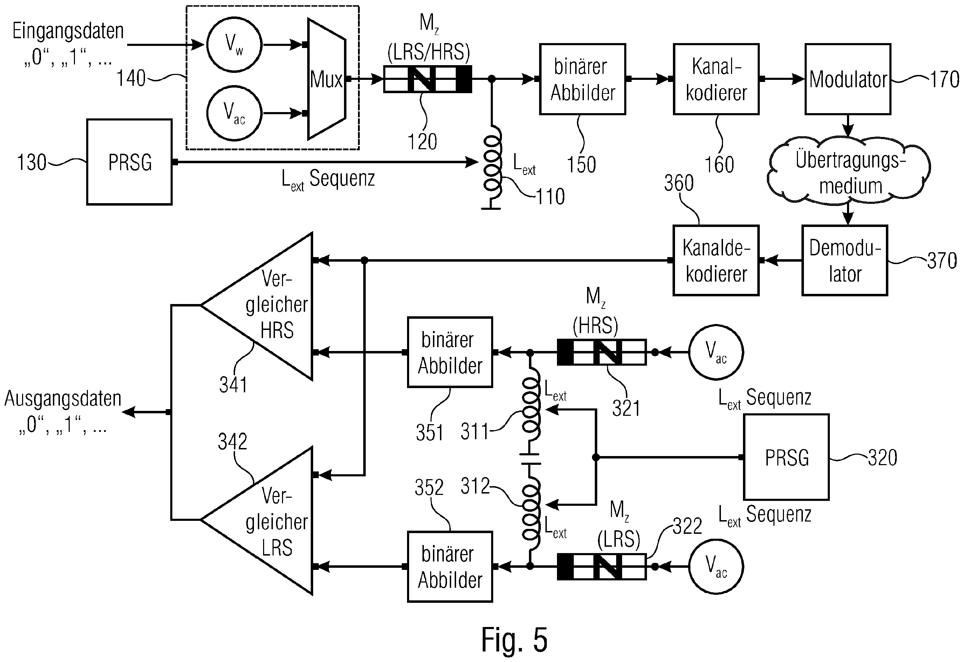

Eine Schaltung zur Realisierung des entsprechenden Protokolls ist in Fig. 5 gezeigt.

Der übertragene Datensatz kann nur dekodiert werden, wenn die identische YMO-Mempedance im LRS und im HRS und der identische Zufallszahlgenerator zur Verfügung steht, welche der Sender zum Verschlüsseln der Daten verwendet hat.

Ein wichtiges Merkmal der Datenverschlüsselung ist, dass bei geeigneter Wahl der Induktivität L des elektronischen Bauelementes in Serie mit der Mempedance im LRS aus dem Induktivitätsbereich LRS und der Induktivität L des elektronischen Bauelementes in Serie mit der Mempedance im HRS aus dem Induktivitätsbereich HRS die |Z| im selben Bereich liegen (Fig. 12 und Fig. 14) und ununterscheidbar sind. Damit sind die als Impedanz verschlüsselten Daten ununterscheidbar und sicher vor einem Angriff während der Übertragung.

Ausführungsformen der Erfindung lassen sich am besten unter Bezugnahme auf Fig. 5 und Fig. 6 zusammen mit Fig. 12 darstellen.

In der Fig. 5 eingezeichnet ist ein sogenanntes Mempedance Bauelement Mz 120, 321, 322. Am speziellen Mempedance Bauelement Mz 120 können zwei verschiedene Zustände mittels einer anliegenden Spannung V_{W} eingestellt werden.

Liegt beispielsweise als Spannung Vw eine Spannung an, die einem Wert "0" entspricht, so wird hierdurch am Mempedance Bauelement 120 der LRS Zustand eingestellt. Liegt dagegen beispielsweise als Spannung Vw eine Spannung an, die einem Wert "1" entspricht, so wird hierdurch am Mempedance Bauelement 120 der HRS Zustand eingestellt.

In Fig. 5 existiert ein PRSG Modul (Pseudozufalls-Sequenzgenerator Modul; englisch: Pseudo Random Sequence Generator), das eine Sequenz von Induktivitätswerten bereitstellt, die an einer Induktivität Lₑₓₜ aufeinanderfolgend eingestellt werden.

Kennzeichnend an den zwei Zuständen (LRS-Zustand oder HRS-Zustand) des Mempedance Bauelements 120 ist, dass bei demselben aktuellen Induktivitätswert das Mempedance Bauelement 120 zwei unterschiedliche Widerstandswerte aufweist. Dies ist im Diagramm in Fig. 12 gezeigt.

Befindet sich das Mempedance Bauelement 120 im HRS Zustand, so ist liegt bei einer Induktivität von 140 µH ein Impedanz-Wert von ca. 1000 Ω vor.

Befindet sich das Mempedance Bauelement 120 dagegen im LRS Zustand, so ist liegt bei einer Induktivität von 140 µH ein Impedanz-Wert von ca. 1350 Ω vor.

Der Induktivitätssequenzgenerator 130 der Fig. 5 stellt nun eine Sequenz von Induktivitätswerten bereit, die an der Induktivität 110 eingestellt werden. Entsprechend weist das Mempedance Bauelement 120 nun entsprechende Widerstandswerte auf, die einerseits von der eingestellten Induktivität abhängen, andererseits aber auch von dem eingestellten Zustand des Mempedance Elements 120.

Eine Ansteuereinheit 140 entscheidet nun, ob der Impedanzwert, der aus dem eingestellten Induktivitätswert resultiert, geeignet ist, um einen binären Wert der Eingangsdaten geheim zu dekodieren. Im Beispiel der Fig. 12 ist dies dann der Fall, wenn der resultierende Impedanzwert im Bereich zwischen ca. 750 Ω und ca. 1080 Ω liegt. Dann nämlich kann ein Angreifer nicht entscheiden, ob das Mempedance Element 120 in den LRZ Zustand eingestellt wurde, um eine "0" zu kodieren, oder ob das Mempedance Element 120 in den HRS Zustand eingestellt wurde, um eine "1" zu kodieren.

Vielmehr ist zur Dekodierung ein gleich ausgelegter Induktivitätssequenzgenerator wie der Induktivitätssequenzgenerator 130 erforderlich und Mempedance Elemente mit gleichen Eigenschaften wie das Mempedance Element 120.

In Fig. 5 ist nun dekoderseitig ein Induktivitätssequenzgenerator 330 angeordnet, der die gleiche Sequenz von Induktivitätswerten wie der Induktivitätssequenzgenerator 130 erzeugt.

Ferner weist die Dekoder-Seite in Fig. 5 zwei Mempedance Elemente 321 und 322 auf, die dieselben Eigenschaften wie das enkoderseitige Mempedance Element 120 aufweisen.

Mempedance Element 321 befindet sich allerdings dauerhaft im HRS Zustand.

Weist also das Mempedance Element 321 auf denselben Induktivitätswert hin, der auch enkoderseitig verwendet wurde, und weist es dieselbe Impedanz auf, die auch Mempedance Element 120 aufgewiesen hat, so kann der Dekoder schlussfolgern, dass sich Mempedance Element 120 im HRS Zustand befunden hat und es sollte (im Beispiel der Fig. 12) eine "1" kodiert werden.

Mempedance-Element 322 befindet sich dagegen dauerhaft im LRS Zustand.

Weist das Mempedance Element 322 auf denselben Induktivitätswert hin, der auch enkoderseitig verwendet wurde, und weist es dieselbe Impedanz auf, die auch Mempedance Element 120 aufgewiesen hat, so kann der Dekoder schlussfolgern, dass sich Mempedance Element 120 im LRS Zustand befunden hat und es sollte (im Beispiel der Fig. 12) eine "0" kodiert werden.

Jeweils zwei Vergleichseinheiten 341, 342 führen den Vergleich zwischen dekoderseitig erzeugtem Impedanzwert und dem vom Enkoder empfangenen Impedanzwert durch.

In Fig. 5 werden die binär abgebildeten Impedanzwerte miteinander verglichen. So wird enkoderseitig der tatsächliche Impedanzwert durch einen binären Abbilder 150 (zum Beispiel auf die Werte "00", "01", "10" und "11") binär abgebildet. Dekoderseitig erfolgt die entsprechende Abbildung durch die binären Abbilder 351 und 352, und es werden durch die Vergleichseinheiten 341 und 342 die binären Abbildungen der Impedanzwerte verglichen.

Stattdessen kann in alternativen Ausführungsformen aber aus der übertragenen, vom Dekoder empfangenen, binären Abbildung des Impedanzwerts der tatsächliche Impedanzwert bestimmt werden. In diesem Fall können in den Vergleichern 341 und 342 die tatsächlichen impedanzwerte verglichen werden und die binären Abbilder 351 und 352 sind verzichtbar.

Es ist auch denkbar, die (annähernd tatsächlichen) Impedanzwerte von Enkodierer zum Dekodierer zu übertragen. Auch in diesem Fall sind die binären Abbilder 351 und 352 verzichtbar; ebenso dann auch enkoderseitig der binäre Abbilder 150.

Zu beachten ist aber, dass der Impedanzwert aber auch einen Wert aufweisen kann, der unzulässig ist. In Fig. 12 ist dies der Wertebereich größer ca. 1080 Ω und kleiner ca. 750 Ω. In diesem Fall wird mit dem empfangenen Impedanzwert kein Datenwert der zu übertragenden Eingangsdaten übertragen und der entsprechende Impedanzwert wird vom Dekoder ignoriert.

In den Fig. 11 und Fig. 12 bzw. Fig. 13 und Fig. 14 geben die Frequenzen 1.314 MHz (Fig. 11 und Fig. 12) bzw. 100 kHz (Fig. 13 und 14) eine Frequenz des Wechsels der Induktivitätswerte vom Induktivitätssequenzgenerator 130 an.

Im Folgenden werden allgemeine Ausführungsformen der Erfindung dargestellt.

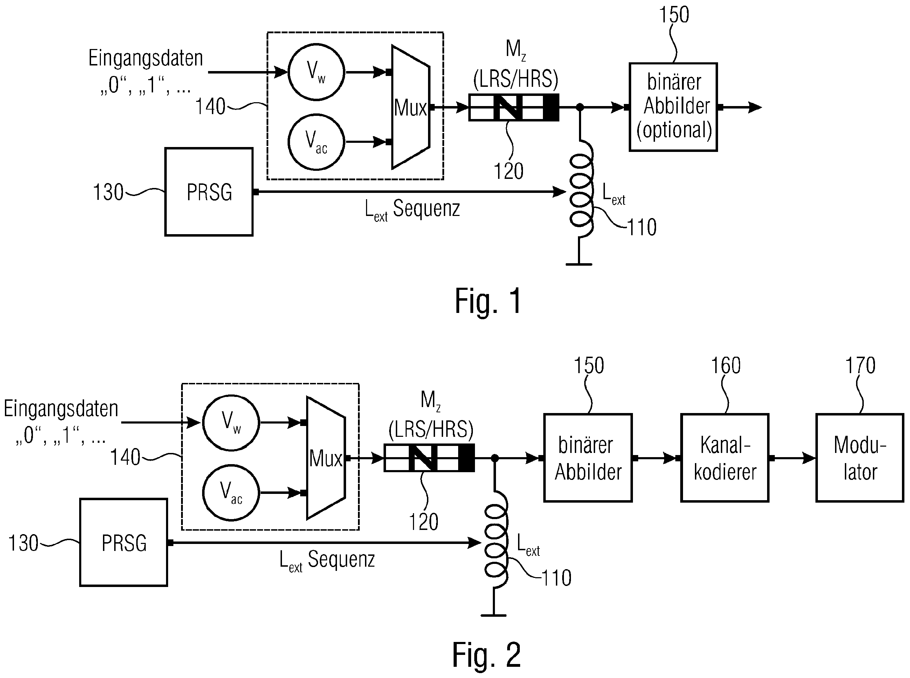

So zeigt Fig. 1 einen Enkodierer zur Enkodierung einer binären Datensequenz gemäß einer Ausführungsform.

Der Enkodierer umfasst ein Induktivitätselement 110 das eine Induktivität aufweist, die einstellbar ist.

Ferner umfasst der Enkodierer umschaltbares Element 120, das ausgebildet ist, in einen ersten Zustand (z.B. LRS Zustand) oder in einen zweiten Zustand (z.B. HRS Zustand) geschaltet zu werden, wobei, wenn das Induktivitätselement 110 eine Induktivität mit einem ersten Induktivitätswert aufweist, das umschaltbare Element 120 eine erste Impedanz aufweist, wenn das umschaltbare Element 120 in den ersten Zustand geschaltet ist, und wobei, wenn das Induktivitätselement 110 die Induktivität mit dem ersten Induktivitätswert aufweist, das umschaltbare Element 120 eine zweite Impedanz aufweist, die von der ersten Impedanz verschieden ist, wenn das umschaltbare Element 120 in den zweiten Zustand geschaltet ist.

Des Weiteren umfasst der Enkodierer einen Induktivitätssequenzgenerator 130, der ausgebildet ist, eine Induktivitäts-Sequenz umfassend eine Mehrzahl von Induktivitätswerten zu erzeugen und jeden Induktivitätswert der Mehrzahl von Induktivitätswerten der Induktivitätssequenz an dem Induktivitätselement 110 einzustellen.

Ferner umfasst der Enkodierer eine Ansteuereinheit 140.

Die Ansteuereinheit 140 ist ausgebildet, wenn die Impedanz, die das umschaltbare Element 120 aufweist, innerhalb eines vordefinierten Impedanzbereichs liegt, nachdem einer der Induktivitätswerte der Mehrzahl von Induktivitätswerten der Induktivitätssequenz eingestellt wurde, das umschaltbare Element 120 abhängig von einem Binärwert der binären Datensequenz in den ersten Zustand oder den zweiten Zustand zu schalten, und

Des Weiteren ist die Ansteuereinheit 140 ausgebildet, das umschaltbare Element 120 nicht zu schalten und in dem ersten oder zweiten Zustand zu belassen, wenn die Impedanz, die das umschaltbare Element 120 aufweist, innerhalb des vordefinierten Impedanzbereichs liegt, nachdem der eine der Induktivitätswerte der Mehrzahl von Induktivitätswerten der Induktivitätssequenz eingestellt wurde.

In einer Ausführungsform kann das umschaltbare Element 120 beispielsweise Yttrium-Manganoxid aufweisen.

Gemäß einer Ausführungsform kann der Enkodierer ferner z.B. einen binären Abbilder 150 umfassen, der ausgebildet ist, eine Mehrzahl von Impedanzen zu binärkodieren, die das umschaltbare Element 120 jeweils aufweist, nachdem die Mehrzahl von Induktivitätswerten der Induktivitätssequenz an dem Induktivitätselement 110 jeweils eingestellt wurden, um eine Mehrzahl von binär kodierten Impedanzwerten zu erhalten.

Fig. 2 zeigt einen Enkodierer gemäß einer weiteren Ausführungsform.

Der Enkodierer umfasst dabei in Fig. 2 des Weiteren einen Kanalkodierer 160, der ausgebildet ist, die Mehrzahl der binär kodierten Impedanzwerte zu kanalkodieren, um ein kanalkodiertes Signal zu erhalten.

In Fig. 2 umfasst der Enkodierer ferner einen Modulator 170, der ausgebildet ist, das kanalkodierte Signal zu modulieren, um ein moduliertes Signal zu erhalten.

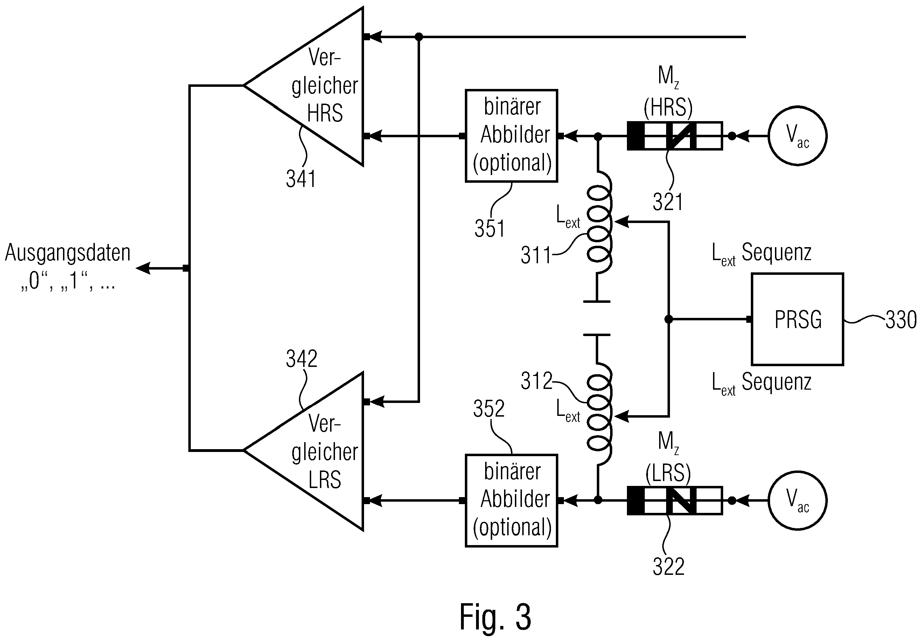

Fig. 3 zeigt einen Dekodierer zur Dekodierung, um eine binäre Datensequenz zu erhalten, gemäß einer Ausführungsform
Der Dekodierer umfasst ein erstes Induktivitätselement 311, das eine Induktivität aufweist, die einstellbar ist.

Des Weiteren umfasst der Dekodierer ein erstes Zustands-Element 321, das ausgebildet ist, wenn das erste Induktivitätselement 311 eine Induktivität mit einem ersten Induktivitätswert aufweist, eine erste Impedanz aufzuweisen, und, wenn das erste Induktivitätselement 311 eine Induktivität mit einem zweiten Induktivitätswert aufweist, der von dem ersten Induktivitätswert verschieden ist, eine zweite Impedanz aufzuweisen, die von der ersten Impedanz verschieden ist.

Ferner umfasst der Dekodierer ein zweites Induktivitätselement 312, das eine Induktivität aufweist, die einstellbar ist.

Des Weiteren umfasst der Dekodierer ein zweites Zustands-Element 322, das ausgebildet ist, wenn das zweite Induktivitätselement 312 eine Induktivität mit dem ersten Induktivitätswert aufweist, eine dritte Impedanz aufzuweisen, die von der ersten Impedanz verschieden ist, und, wenn das zweite Induktivitätselement 312 eine Induktivität mit dem zweiten Induktivitätswert aufweist, eine vierte Impedanz aufzuweisen, die von der zweiten Impedanz und von der dritten Impedanz verschieden ist.

Ferner umfasst der Dekodierer einen Induktivitätssequenzgenerator 330, der ausgebildet ist, eine Induktivitäts-Sequenz umfassend eine Mehrzahl von Induktivitätswerten zu erzeugen und jeden Induktivitätswert der Mehrzahl von Induktivitätswerten der Induktivitätssequenz an dem ersten Induktivitätselement 311 einzustellen und an dem zweiten Induktivitätselement 312 einzustellen.

Des Weiteren umfasst der Dekodierer eine erste Vergleichseinheit 341, die ausgebildet ist, einen ersten Vergleich durchzuführen, nachdem ein aktueller Induktivitätswert der Mehrzahl von Induktivitätswerten der Induktivitätssequenz an dem ersten Induktivitätselement 311 eingestellt wurde, wobei der erste Vergleich von einem empfangenen Impedanzwert abhängt und von einer Impedanz abhängt, die das erste Zustands-Element 321 aufweist, wenn der aktuelle Induktivitätswert an dem ersten Induktivitätselement 311 eingestellt wurde,
Ferner umfasst der Dekodierer eine zweite Vergleichseinheit 342, die ausgebildet ist, einen zweiten Vergleich durchzuführen, nachdem der aktuelle Induktivitätswert der Mehrzahl von Induktivitätswerten der Induktivitätssequenz an dem zweiten Induktivitätselement 312 eingestellt wurde, wobei der zweite Vergleich von dem empfangenen Impedanzwert abhängt und von einer Impedanz abhängt, die das zweite Zustands-Element 322 aufweist, wenn der aktuelle Induktivitätswert an dem zweiten Induktivitätselement 312 eingestellt wurde.

Der Dekodierer ist ausgebildet, als Ergebnis der Auswertung des empfangenen Impedanzwertes keinen Binärwert der binären Datensequenz auszugeben, wenn sich aus dem empfangenen Impedanzwert ergibt, dass mit dem empfangenen Impedanzwert kein Binärwert der binären Datensequenz kodiert wird.

Des Weiteren ist der Dekodierer ausgebildet, wenn sich aus dem empfangenen Impedanzwert ergibt, dass mit dem empfangenen Impedanzwert ein Binärwert der binären Datensequenz kodiert wird, als Ergebnis der Auswertung des empfangenen Impedanzwertes einen ersten binären Wert als einen Binärwert der binären Datensequenz auszugeben, wenn der erste Vergleich eine Übereinstimmung liefert.

Ferner ist der Dekodierer ausgebildet, wenn sich aus dem empfangenen Impedanzwert ergibt, dass mit dem empfangenen Impedanzwert ein Binärwert der binären Datensequenz kodiert wird, als das Ergebnis der Auswertung des empfangenen Impedanzwertes einen zweiten binären Wert als den besagten einen Binärwert der binären Datensequenz auszugeben, der von dem ersten binären Wert verschieden ist, wenn der erste Vergleich keine Übereinstimmung liefert, wenn aber der zweite Vergleich eine Übereinstimmung liefert.

In einer Ausführungsform kann das erste beispielsweise Zustandselement Yttrium-Manganoxid aufweisen, und das zweite Zustandselement kann beispielsweise Yttrium-Manganoxid aufweisen.

Gemäß einer weiteren Ausführungsform kann der empfangene Impedanzwert beispielsweise ein binär kodierter empfangener Impedanzwert einer Mehrzahl binär kodierter Impedanzwerte sein.

Dabei kann der Dekodierer z.B. ferner einen ersten Binärkodierer 351 umfassen, der ausgebildet sein kann, die Impedanz, die das erste Zustands-Element 321 aufweist, wenn der aktuelle Induktivitätswert an dem ersten Induktivitätselement 311 eingestellt wurde, als einen erste binär kodierten Impedanzwert binär zu kodieren.

Der Dekodierer kann dabei z.B. ferner einen zweiten Binärkodierer 352 umfassen, der ausgebildet sein kann, die Impedanz, die das zweite Zustands-Element 322 aufweist, wenn der aktuelle Induktivitätswert an dem zweiten Induktivitätselement 312 eingestellt wurde, als einen zweiten binär kodierten Impedanzwert binär zu kodieren.

Die erste Vergleichseinheit 341 kann dabei z.B. ausgebildet sein, den ersten Vergleich als einen Vergleich des binär kodierten empfangenen Impedanzwerts mit dem ersten binär kodierten Impedanzwert durchzuführen.

Des Weiteren kann dabei z.B. die zweite Vergleichseinheit 342 ausgebildet sein, den zweiten Vergleich als einen Vergleich des binär kodierten empfangenen Impedanzwerts mit dem zweiten binär kodierten Impedanzwert durchzuführen.

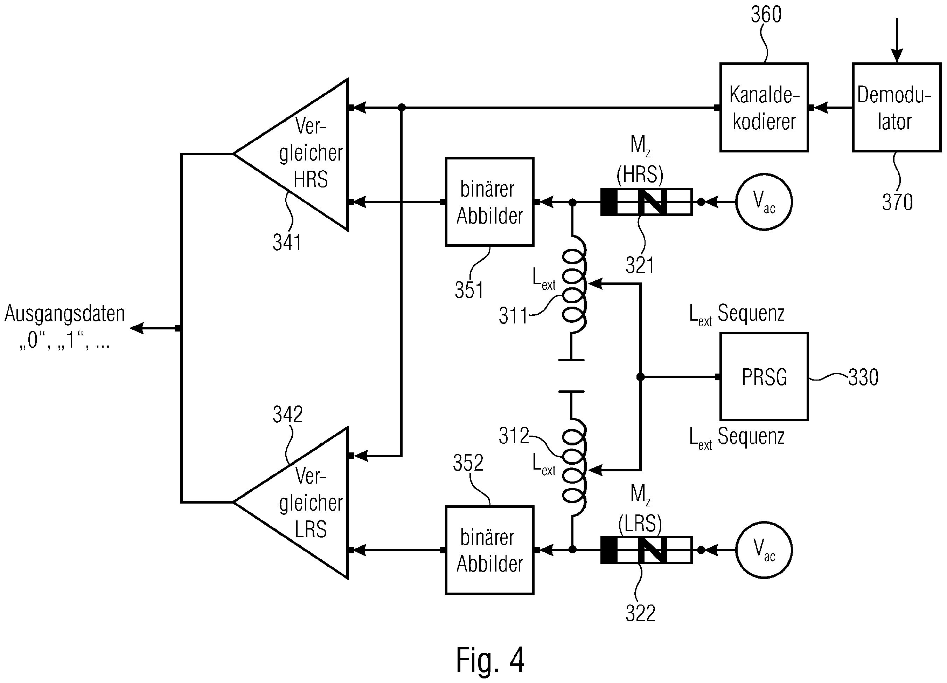

Fig. 4 zeigt einen Dekodierer gemäß einer weiteren Ausführungsform.

In Fig. 4 umfasst der Dekodierer ferner einen Kanaldekodierer 360, der ausgebildet ist, ein kanalkodiertes Signal zu dekodieren, um die Mehrzahl der binär kodierten Impedanzwerte zu erhalten.

Ferner umfasst der Dekodierer in Fig. 4 einen Demodulator 370, der ausgebildet ist, ein moduliertes Signal zu demodulieren, um das kanalkodierte Signal zu erhalten.

Fig. 5 zeigt ein System gemäß einer Ausführungsform. Das System der Fig. 5 umfasst den oben beschriebenen Enkodierer der Fig. 2 und den oben beschriebenen Dekodierer der Fig. 4. Der Enkodierer ist ausgebildet, eine binärer Datensequenz zu enkodieren und in enkodierter Form an den Dekodierer zu übermitteln. Der Dekodierer ist ausgebildet, die enkodierte Form der binären Datensequenz zu dekodieren, um die binäre Datensequenz zu dekodieren.

In einer Ausführungsform weist das umschaltbare Element 120 ein Selten-Erd-Manganat auf.

In einer besonderen Ausführungsform weist das umschaltbare Element 120 z.B. Yttrium-Manganoxid auf.

In einer Ausführungsform weist das erste Zustandselement 321 ein Selten-Erd-Manganat auf z.B. Yttrium-Manganoxid, und/oder das zweite Zustandselement 322 weist ein Selten-Erd-Manganat auf z.B. Yttrium-Manganoxid.

In einer besonderen Ausführungsform weist z.B. das erste Zustandselement 321 Yttrium-Manganoxid auf, und/oder das zweite Zustandselement 322 weist Yttrium-Manganoxid auf.

In einer Ausführungsform kann das erste Zustandselement 321 als ein nichtflüchtiger Impedanzschalter und/oder das zweite Zustandselement 322 als ein nichtflüchtiger Impedanzschalter ausgebildet sein.

In der DE 10 2018 112 605 A1 wird ein nichtflüchtiger Impedanzschalter, rekonfiguriert nach einem Verfahren zur Rekonfiguration einer Vortex-Dichte, beschrieben. Der nichtflüchtige Impedanzschalter umfasst eine Schichtabfolge bestehend aus mindestens einer Schicht aus einem Seltenen-Erd-Manganat sowie einen ersten Kontakt, der auf einer Seite des Seltenen-Erd-Manganats angeordnet ist sowie einen zweiten Kontakt, der auf der gegenüberliegenden Seite des ersten Kontaktes oder auf der gleichen Seite wie der erste Kontakt angeordnet ist sowie Isolationsstrukturen zur zeitlich gesteuerten Wärmeabfuhr und zur Einstellung eines Temperaturgradienten während eines Durchlaufens einer Ordnungstemperatur des Seltene-Erd-Manganats (siehe DE 10 2018 112 605 A1, Absatz [0015]).

In einer Ausführungsform kann das umschaltbare Element 120 des Enkodierers wie der nichtflüchtiger Impedanzschalter der DE 10 2018 112 605 A1, Absatz [0015], ausgebildet sein.

In einer Ausführungsform kann das erste Zustandselement 321 und/oder das zweite Zustandselement 322 des Dekodierers jeweils wie der nichtflüchtiger Impedanzschalter der DE 10 2018 112 605 A1, Absatz [0015], ausgebildet sein. Dabei kann beispielsweise der nichtflüchtige Impedanzschalter, der das erste Zustandselement bildet, dauerhaft in einen ersten Zustand geschaltet sein, und beispielsweise kann der nichtflüchtige Impedanzschalter, der das zweite Zustandselement bildet, dauerhaft in einen zweiten Zustand geschaltet sein, der von dem ersten Zustand verschieden ist.

Eine Ausführungsform betrifft dabei einen in DE 10 2018 112 605 A1, Absatz [0016] definierten nichtflüchtigen Impedanzschalter.

Eine weitere Ausführungsform verwendet dabei eine Schicht aus einem Seltenen-Erd-Manganat wie in DE 10 2018 112 605 A1, Absatz [0017] beschrieben.

In weiteren Ausführungsformen weist der nichtflüchtige Impedanzschalter eine der in DE 10 2018 112 605 A1, Absatz [0018] - [0023] beschriebenen Ausgestaltungen auf.

In Ausführungsformen ist der nichtflüchtige Impedanzschalter wie in einer der Fig. 1a, 1b, 1c , 2a und 2b der DE 10 2018 112 605 A1 ausgebildet. Beispielhafte Ausführungsformen für den nichtflüchtigen Impendanzschalter finden sich in der DE 10 2018 112 605 A1, Absatz [0026] - [0028].

Weitere Details sind in den Absätzen [0029] - [0036] der DE 10 2018 112 605 A1 beschrieben.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder einer elektronischen Schaltung durchgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software oder zumindest teilweise in Hardware oder zumindest teilweise in Software implementiert sein. Die Implementierung kann unter Verwendung eines digitalen Speichermediums, beispielsweise einer Floppy-Disk, einer DVD, einer BluRay Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinen-lesbaren Träger gespeichert ist. Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist. Der Datenträger oder das digitale Speichermedium oder das computerlesbare Medium sind typischerweise greifbar und/oder nicht flüchtig.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Literatur:

[Cisco2014] Cisco, The Zettabyte Era: Trends and Analysis, White Paper, (2014)
[US 9,812,640 B2] US 9,812,640 B2, Complementary resistance switch, contactconnected polycrystalline piezo- or ferroelectric thin film layer, method for encrypting a bit sequence, T. You, H. Schmidt, N. Du, D. Bürger, I. Skorupa, N. Manjunath, erteilt 17.11.2017
[Du2014] Nan Du et al., J. Appl. Phys. 115, 124501 (2014)
[Ascoli2016] A. Ascoli, V. Senger, R. Tetzlaff, N. Du, O. G. Schmidt, and H. Schmidt, "BiFeO3 memristor-based encryption of medical data", Int. Symp. Circ. and Syst. (ISCAS), 2016

## Patentansprüche

1. Dekodierer zur Dekodierung, um eine binäre Datensequenz zu erhalten, umfassend:
ein erstes Induktivitätselement (311), das eine Induktivität aufweist, die einstellbar ist,
ein erstes Zustands-Element (321), das ausgebildet ist, wenn das erste Induktivitätselement (311) eine Induktivität mit einem ersten Induktivitätswert aufweist, eine erste Impedanz aufzuweisen, und, wenn das erste Induktivitätselement (311) eine Induktivität mit einem zweiten Induktivitätswert aufweist, der von dem ersten Induktivitätswert verschieden ist, eine zweite Impedanz aufzuweisen, die von der ersten Impedanz verschieden ist,
ein zweites Induktivitätselement (312), das eine Induktivität aufweist, die einstellbar ist,
ein zweites Zustands-Element (322), das ausgebildet ist, wenn das zweite Induktivitätselement (312) eine Induktivität mit dem ersten Induktivitätswert aufweist, eine dritte Impedanz aufzuweisen, die von der ersten Impedanz verschieden ist, und, wenn das zweite Induktivitätselement (312) eine Induktivität mit dem zweiten Induktivitätswert aufweist, eine vierte Impedanz aufzuweisen, die von der zweiten Impedanz und von der dritten Impedanz verschieden ist,
einen Induktivitätssequenzgenerator (330), der ausgebildet ist, eine Induktivitäts-Sequenz umfassend eine Mehrzahl von Induktivitätswerten zu erzeugen und jeden Induktivitätswert der Mehrzahl von Induktivitätswerten der Induktivitätssequenz an dem ersten Induktivitätselement (311) einzustellen und an dem zweiten Induktivitätselement (312) einzustellen,
eine erste Vergleichseinheit (341), die ausgebildet ist, einen ersten Vergleich durchzuführen, nachdem ein aktueller Induktivitätswert der Mehrzahl von Induktivitätswerten der Induktivitätssequenz an dem ersten Induktivitätselement (311) eingestellt wurde, wobei der erste Vergleich von einem empfangenen Impedanzwert abhängt und von einer Impedanz abhängt, die das erste Zustands-Element (321) aufweist, wenn der aktuelle Induktivitätswert an dem ersten Induktivitätselement (311) eingestellt wurde,
eine zweite Vergleichseinheit (342), die ausgebildet ist, einen zweiten Vergleich durchzuführen, nachdem der aktuelle Induktivitätswert der Mehrzahl von Induktivitätswerten der Induktivitätssequenz an dem zweiten Induktivitätselement (312) eingestellt wurde, wobei der zweite Vergleich von dem empfangenen Impedanzwert abhängt und von einer Impedanz abhängt, die das zweite Zustands-Element (322) aufweist, wenn der aktuelle Induktivitätswert an dem zweiten Induktivitätselement (312) eingestellt wurde,
wobei der Dekodierer ausgebildet ist, als Ergebnis der Auswertung des empfangenen Impedanzwertes keinen Binärwert der binären Datensequenz auszugeben, wenn sich aus dem empfangenen Impedanzwert ergibt, dass mit dem empfangenen Impedanzwert kein Binärwert der binären Datensequenz kodiert wird,
wobei, wenn sich aus dem empfangenen Impedanzwert ergibt, dass mit dem empfangenen Impedanzwert ein Binärwert der binären Datensequenz kodiert wird, der Dekodierer ausgebildet ist, als Ergebnis der Auswertung des empfangenen Impedanzwertes einen ersten binären Wert als einen Binärwert der binären Datensequenz auszugeben, wenn der erste Vergleich eine Übereinstimmung liefert,
wobei, wenn sich aus dem empfangenen Impedanzwert ergibt, dass mit dem empfangenen Impedanzwert ein Binärwert der binären Datensequenz kodiert wird, der Dekodierer ausgebildet ist, als das Ergebnis der Auswertung des empfangenen Impedanzwertes einen zweiten binären Wert als den besagten einen Binärwert der binären Datensequenz auszugeben, der von dem ersten binären Wert verschieden ist, wenn der erste Vergleich keine Übereinstimmung liefert, wenn aber der zweite Vergleich eine Übereinstimmung liefert.

2. Dekodierer nach Anspruch 1,
wobei das erste Zustandselement Yttrium-Manganoxid aufweist, und
wobei das zweite Zustandselement Yttrium-Manganoxid aufweist.

3. Dekodierer nach Anspruch 1 oder 2,
wobei der empfangene Impedanzwert ein binär kodierter empfangener Impedanzwert einer Mehrzahl binär kodierter Impedanzwerte ist,
wobei der Dekodierer ferner einen ersten Binärkodierer (351) umfasst, der ausgebildet ist, die Impedanz, die das erste Zustands-Element (321) aufweist, wenn der aktuelle Induktivitätswert an dem ersten Induktivitätselement (311) eingestellt wurde, als einen erste binär kodierten Impedanzwert binärzukodieren,
wobei der Dekodierer ferner einen zweiten Binärkodierer (352) umfasst, der ausgebildet ist, die Impedanz, die das zweite Zustands-Element (322) aufweist, wenn der aktuelle Induktivitätswert an dem zweiten Induktivitätselement (312) eingestellt wurde, als einen zweiten binär kodierten Impedanzwert binärzukodieren,
wobei die erste Vergleichseinheit (341) ausgebildet ist, den ersten Vergleich als einen Vergleich des binär kodierten empfangenen Impedanzwerts mit dem ersten binär kodierten Impedanzwert durchzuführen, und
wobei die zweite Vergleichseinheit (342) ausgebildet ist, den zweiten Vergleich als einen Vergleich des binär kodierten empfangenen Impedanzwerts mit dem zweiten binär kodierten Impedanzwert durchzuführen.

4. Dekodierer nach Anspruch 3,
wobei der Dekodierer ferner einen Kanaldekodierer (360) umfasst, der ausgebildet ist, ein kanalkodiertes Signal zu dekodieren, um die Mehrzahl der binär kodierten Impedanzwerte zu erhalten; oder
wobei der Dekodierer ferner einen Kanaldekodierer (360) umfasst, der ausgebildet ist, ein kanalkodiertes Signal zu dekodieren, um die Mehrzahl der binär kodierten Impedanzwerte zu erhalten, wobei der Dekodierer ferner einen Demodulator (370) umfasst, der ausgebildet ist, ein moduliertes Signal zu demodulieren, um das kanalkodierte Signal zu erhalten.

5. Enkodierer zur Enkodierung einer binären Datensequenz, umfassend:
ein Induktivitätselement (110) das eine Induktivität aufweist, die einstellbar ist,
ein umschaltbares Element (120), das ausgebildet ist, in einen ersten Zustand oder in einen zweiten Zustand geschaltet zu werden, wobei, wenn das Induktivitätselement (110) eine Induktivität mit einem ersten Induktivitätswert aufweist, das umschaltbare Element (120) eine erste Impedanz aufweist, wenn das umschaltbare Element (120) in den ersten Zustand geschaltet ist, und wobei, wenn das Induktivitätselement (110) die Induktivität mit dem ersten Induktivitätswert aufweist, das umschaltbare Element (120) eine zweite Impedanz aufweist, die von der ersten Impedanz verschieden ist, wenn das umschaltbare Element (120) in den zweiten Zustand geschaltet ist,
einen Induktivitätssequenzgenerator (130), der ausgebildet ist, eine Induktivitäts-Sequenz umfassend eine Mehrzahl von Induktivitätswerten zu erzeugen und jeden Induktivitätswert der Mehrzahl von Induktivitätswerten der Induktivitätssequenz an dem Induktivitätselement (110) einzustellen,
eine Ansteuereinheit (140),
wobei die Ansteuereinheit (140) ausgebildet ist, wenn die Impedanz, die das umschaltbare Element (120) aufweist, innerhalb eines vordefinierten Impedanzbereichs liegt, nachdem einer der Induktivitätswerte der Mehrzahl von Induktivitätswerten der Induktivitätssequenz eingestellt wurde, das umschaltbare Element (120) abhängig von einem Binärwert der binären Datensequenz in den ersten Zustand oder den zweiten Zustand zu schalten, und
wobei die Ansteuereinheit (140) ausgebildet ist, das umschaltbare Element (120) nicht zu schalten und in dem ersten oder zweiten Zustand zu belassen, wenn die Impedanz, die das umschaltbare Element (120) aufweist, innerhalb des vordefinierten Impedanzbereichs liegt, nachdem der eine der Induktivitätswerte der Mehrzahl von Induktivitätswerten der Induktivitätssequenz eingestellt wurde.

6. Enkodierer nach Anspruch 5,
wobei das umschaltbare Element (120) Yttrium-Manganoxid aufweist.

7. Enkodierer nach Anspruch 5 oder 6,
wobei der Enkodierer ferner einen binären Abbilder (150) umfasst, der ausgebildet ist, eine Mehrzahl von Impedanzen zu binärkodieren, die das umschaltbare Element (120) jeweils aufweist, nachdem die Mehrzahl von Induktivitätswerten der Induktivitätssequenz an dem Induktivitätselement (110) jeweils eingestellt wurden, um eine Mehrzahl von binär kodierten Impendanzwerten zu erhalten; oder
wobei der Enkodierer ferner einen binären Abbilder (150) umfasst, der ausgebildet ist, eine Mehrzahl von Impedanzen zu binärkodieren, die das umschaltbare Element (120) jeweils aufweist, nachdem die Mehrzahl von Induktivitätswerten der Induktivitätssequenz an dem Induktivitätselement (110) jeweils eingestellt wurden, um eine Mehrzahl von binär kodierten Impendanzwerten zu erhalten, wobei der Enkodierer ferner einen Kanalkodierer (160) umfasst, der ausgebildet ist, die Mehrzahl der binär kodierten Impedanzwerte zu kanalkodieren, um ein kanalkodiertes Signal zu erhalten; oder
wobei der Enkodierer ferner einen binären Abbilder (150) umfasst, der ausgebildet ist, eine Mehrzahl von Impedanzen zu binärkodieren, die das umschaltbare Element (120) jeweils aufweist, nachdem die Mehrzahl von Induktivitätswerten der Induktivitätssequenz an dem Induktivitätselement (110) jeweils eingestellt wurden, um eine Mehrzahl von binär kodierten Impendanzwerten zu erhalten, wobei der Enkodierer ferner einen Kanalkodierer (160) umfasst, der ausgebildet ist, die Mehrzahl der binär kodierten Impedanzwerte zu kanalkodieren, um ein kanalkodiertes Signal zu erhalten, wobei der Enkodierer ferner einen Modulator (170) umfasst, der ausgebildet ist, das kanalkodierte Signal zu modulieren, um ein moduliertes Signal zu erhalten.

8. System, umfassend:
einen Enkodierer nach einem der Ansprüche 5 bis 7, und
einen Dekodierer nach einem der Ansprüche 1 bis 4,
wobei der Enkodierer nach einem der Ansprüche 5 bis 7 ausgebildet ist, eine binäre Datensequenz zu enkodieren und in enkodierter Form an den Dekodierer nach einem der Ansprüche 1 bis 4 zu übermitteln, und
wobei der Dekodierer nach einem der Ansprüche 1 bis 4 ausgebildet ist, die enkodierte Form der binären Datensequenz zu dekodieren, um die binäre Datensequenz zu dekodieren.

9. Verfahren zur Dekodierung, um eine binäre Datensequenz zu erhalten, umfassend:
Erzeugung einer Induktivitäts-Sequenz umfassend eine Mehrzahl von Induktivitätswerten durch einen Induktivitätssequenzgenerator,
Einstellung jedes Induktivitätswertes der Mehrzahl von Induktivitätswerten der Induktivitätssequenz an einem ersten Induktivitätselement und an einem zweiten Induktivitätselement einzustellen, wobei das erste Induktivitätselement eine Induktivität aufweist, die einstellbar ist, und wobei das zweite Induktivitätselement eine Induktivität aufweist, die einstellbar ist,
Durchführen eines ersten Vergleichs durch eine erste Vergleichseinheit, nachdem ein aktueller Induktivitätswert der Mehrzahl von Induktivitätswerten der Induktivitätssequenz an dem ersten Induktivitätselement eingestellt wurde, wobei der erste Vergleich von einem empfangenen Impedanzwert abhängt und von einer Impedanz abhängt, die ein erstes Zustands-Element aufweist, wenn der aktuelle Induktivitätswert an dem ersten Induktivitätselement eingestellt wurde,
Durchführen eines zweiten Vergleichs durch eine zweite Vergleichseinheit, nachdem der aktuelle Induktivitätswert der Mehrzahl von Induktivitätswerten der Induktivitätssequenz an dem zweiten Induktivitätselement eingestellt wurde, wobei der zweite Vergleich von dem empfangenen Impedanzwert abhängt und von einer Impedanz abhängt, die ein zweites Zustands-Element aufweist, wenn der aktuelle Induktivitätswert an dem zweiten Induktivitätselement eingestellt wurde,
als Ergebnis der Auswertung des empfangenen Impedanzwertes, kein Ausgeben eines Binärwerts der binären Datensequenz, wenn sich aus dem empfangenen Impedanzwert ergibt, dass mit dem empfangenen Impedanzwert kein Binärwert der binären Datensequenz kodiert wird,
wenn sich aus dem empfangenen Impedanzwert ergibt, dass mit dem empfangenen Impedanzwert ein Binärwert der binären Datensequenz kodiert wird, als Ergebnis der Auswertung des empfangenen Impedanzwertes, Ausgeben eines ersten binären Werts als einen Binärwert der binären Datensequenz, wenn der erste Vergleich eine Übereinstimmung liefert, und
wenn sich aus dem empfangenen Impedanzwert ergibt, dass mit dem empfangenen Impedanzwert ein Binärwert der binären Datensequenz kodiert wird, als das Ergebnis der Auswertung des empfangenen Impedanzwertes, Ausgeben eines zweiten binären Werts als den besagten einen Binärwert der binären Datensequenz, der von dem ersten binären Wert verschieden ist, wenn der erste Vergleich keine Übereinstimmung liefert, wenn aber der zweite Vergleich eine Übereinstimmung liefert,
wobei das erste Zustands-Element ausgebildet ist, wenn das erste Induktivitätselement eine Induktivität mit einem ersten Induktivitätswert aufweist, eine erste Impedanz aufzuweisen, und, wenn das erste Induktivitätselement eine Induktivität mit einem zweiten Induktivitätswert aufweist, der von dem ersten Induktivitätswert verschieden ist, eine zweite Impedanz aufzuweisen, die von der ersten Impedanz verschieden ist, und
wobei das zweite Zustands-Element ausgebildet ist, wenn das zweite Induktivitätselement eine Induktivität mit dem ersten Induktivitätswert aufweist, eine dritte Impedanz aufzuweisen, die von der ersten Impedanz verschieden ist, und, wenn das zweite Induktivitätselement eine Induktivität mit dem zweiten Induktivitätswert aufweist, eine vierte Impedanz aufzuweisen, die von der zweiten Impedanz und von der dritten Impedanz verschieden ist.

10. Verfahren zur Enkodierung einer binären Datensequenz, umfassend:
Erzeugen einer Induktivitäts-Sequenz umfassend eine Mehrzahl von Induktivitätswerten durch einen Induktivitätssequenzgenerator,
Einstellen jedes Induktivitätswerts der Mehrzahl von Induktivitätswerten der Induktivitätssequenz an einem Induktivitätselement, wobei das Induktivitätselement das eine Induktivität aufweist, die einstellbar ist, wobei, wenn das Induktivitätselement eine Induktivität mit einem ersten Induktivitätswert aufweist, ein umschaltbares Element eine erste Impedanz aufweist, wenn das umschaltbare Element in einen ersten Zustand geschaltet ist, und wobei, wenn das Induktivitätselement die Induktivität mit dem ersten Induktivitätswert aufweist, das umschaltbare Element eine zweite Impedanz aufweist, die von der ersten Impedanz verschieden ist, wenn das umschaltbare Element in einen zweiten Zustand geschaltet ist,
wobei, wenn die Impedanz, die ein umschaltbare Element aufweist, innerhalb eines vordefinierten Impedanzbereichs liegt, nachdem einer der Induktivitätswerte der Mehrzahl von Induktivitätswerten der Induktivitätssequenz eingestellt wurde, das umschaltbare Element von der Ansteuereinheit (140) abhängig von einem Binärwert der binären Datensequenz in den ersten Zustand oder in den zweiten Zustand geschaltet wird, und
wobei das umschaltbare Element von der Ansteuereinheit (140) nicht geschaltet wird und in dem ersten oder in dem zweiten Zustand belassen wird, wenn die Impedanz, die das umschaltbare Element aufweist, innerhalb des vordefinierten Impedanzbereichs liegt, nachdem der eine der Induktivitätswerte der Mehrzahl von Induktivitätswerten der Induktivitätssequenz eingestellt wurde.

11. Verfahren zur Dekodierung und Enkodierung, umfassend:
ein Verfahren zur Enkodierung nach Anspruch 10, und
ein Verfahren zur Dekodierung nach Anspruch 9,
wobei eine binärer Datensequenz gemäß dem Verfahren nach Anspruch 10 enkodiert wird, um eine enkodierte Form der binären Datensequenz zu erhalten, und
wobei die enkodierte Form der binären Datensequenz gemäß dem Verfahren nach Anspruch 9 dekodiert wird, um die binäre Datensequenz zu dekodieren.

12. Computerprogramm mit einem Programmcode zur Durchführung des Verfahrens nach einem der Ansprüche 9 bis 11.

13. Dekodierer nach einem der Ansprüche 1 bis 4,
wobei das erste Zustandselement (321) ein Selten-Erd-Manganat aufweist, und/oder wobei das zweite Zustandselement (322) ein Selten-Erd-Manganat aufweist.

14. Dekodierer nach einem der Ansprüche 1 bis 4 oder nach Anspruch 13,
wobei das erste Zustandselement (321) als ein erster nichtflüchtiger Impedanzschalter ausgebildet ist, und/oder wobei das zweite Zustandselement (322) als ein zweiter nichtflüchtiger Impedanzschalter ausgebildet ist; oder
wobei das erste Zustandselement (321) als ein erster nichtflüchtige Impedanzschalter ausgebildet ist, und wobei das zweite Zustandselement (322) als ein zweiter nichtflüchtiger Impedanzschalter ausgebildet ist, wobei das erste Zustandselement (321) in einen ersten Zustand geschaltet ist, und wobei das zweite Zustandselement (321) in einen zweite Zustand geschaltet ist, der von dem ersten Zustand verschieden ist.

15. Enkodierer nach einem der Ansprüche 5 bis 7,
wobei das umschaltbare Element (120) ein Selten-Erd-Manganat aufweist; und/oder
wobei das erste Zustandselement (321) als ein nichtflüchtiger Impedanzschalter ausgebildet ist.

## Claims

1. Decoder for decoding to obtain a binary data sequence, comprising:
a first inductance element (311) comprising an adjustable inductance,
a first state element (321) configured to comprise a first impedance when the first inductance element (311) comprises an inductance with a first inductance value and to comprise a second impedance that differs from the first impedance when the first inductance element (311) comprises an inductance with a second inductance value that differs from the first inductance value,
a second inductance element (312) comprising an adjustable inductance,
a second state element (322) configured to comprise a third impedance that differs from the first impedance when the second inductance element (312) comprises an inductance with the first inductance value and to comprise a fourth impedance that differs from the second impedance and from the third impedance when the second inductance element (312) comprises an inductance with the second inductance value,
an inductance sequence generator (330) configured to generate an inductance sequence comprising a plurality of inductance values and to adjust each inductance value of the plurality of inductance values of the inductance sequence at the first inductance element (311) and at the second inductance element (312),
a first comparison unit (341) configured to perform a first comparison after a current inductance value of the plurality of inductance values of the inductance sequence has been adjusted at the first inductance element (311), wherein the first comparison depends on a received impedance value and on an impedance that the first state element (321) comprises when the current inductance value has been adjusted at the first inductance element (311),
a second comparison unit (342) configured to perform a second comparison after the current inductance value of the plurality of inductance values of the inductance sequence has been adjusted at the second inductance element (312), wherein the second comparison depends on the received impedance value and on an impedance that the second state element (322) comprises when the current inductance value has been adjusted at the second inductance element (312),
wherein the decoder is configured to output no binary value of the binary data sequence as a result of the evaluation of the received impedance value when it results from the received impedance value that no binary value of the binary data sequence is encoded with the received impedance value,
wherein, when it results from the received impedance value that a binary value of the binary data sequence is encoded with the received impedance value, the decoder is configured to output a first binary value as a binary value of the binary data sequence as a result of the evaluation of the received impedance value when the first comparison provides a match,
wherein, when it results from the received impedance value that a binary value of the binary data sequence is encoded with the received impedance value, the decoder is configured to output, as the result of the evaluation of the received impedance, a second binary value as said one binary value of the binary data sequence value that differs from the first binary value when the first comparison does not provide a match but when the second comparison does provide a match.

2. Decoder according to claim 1,
wherein the first state element comprises yttrium manganese oxide and
wherein the second state element comprises yttrium manganese oxide.

3. Decoder according to claim 1 or 2,
wherein the received impedance value is a binary encoded received impedance value of a plurality of binary encoded impedance values,
wherein the decoder further comprises a first binary encoder (351) configured to binary encode the impedance that the first state element (321) comprises when the current inductance value has been adjusted at the first inductance element (311) as a first binary encoded impedance value,
wherein the decoder further comprises a second binary encoder (352) configured to binary encode the impedance that the second state element (322) comprises when the current inductance value has been adjusted at the second inductance element (312) as a second binary encoded impedance value,
wherein the first comparison unit (341) is configured to perform the first comparison as a comparison of the binary encoded received impedance value with the first binary encoded impedance value and
wherein the second comparison unit (342) is configured to perform the second comparison as a comparison of the binary encoded received impedance value with the second binary encoded impedance value.

4. Decoder according to claim 3,
wherein the decoder further comprises a channel decoder (360) configured to decode a channel encoded signal to obtain the plurality of binary encoded impedance values; or
wherein the decoder further comprises a channel decoder (360) configured to decode a channel encoded signal to obtain the plurality of binary encoded impedance values, wherein the decoder further comprises a demodulator (370) configured to demodulate a modulated signal to obtain a channel encoded signal.

5. Encoder for encoding a binary data sequence, comprising:
an inductance element (110) comprising an adjustable inductance,
a switchable element (120) configured to be switched to a first state or to a second state, wherein, when the inductance element (110) comprises an inductance with a first inductance value, the switchable element (120) comprises a first impedance when the switchable element (120) is switched to the first state, and wherein, when the inductance element (110) comprises the inductance with the first inductance value, the switchable element (120) comprises a second impedance that differs from the first impedance when the switchable element (120) is switched to the second state,
an inductance sequence generator (130) configured to generate an inductance sequence comprising a plurality of inductance values and to adjust every inductance value of the plurality of inductance values of the inductance sequence at the inductance element (110),
a control unit (140),
wherein the control unit (140) is configured to switch the switchable element (120) to the first state or to the second state in dependence on a binary value of the binary data sequence when the impedance that the switchable element (120) comprises is within a predefined impedance range after one of the inductance values of the plurality of inductance values of the inductance sequence has been adjusted, and
wherein the control unit (140) is configured to not switch the switchable element (120) and to maintain the same in the first or second state when the impedance that the switchable element (120) comprises is within the predefined impedance range after said one of the inductance values of the plurality of inductance values of the inductance sequence has been adjusted.

6. Encoder according to claim 5,
wherein the switchable element (120) comprises yttrium manganese oxide.

7. Encoder according to claim 5 or 6,
wherein the encoder further comprises a binary mapping device (150) configured to binary encode a plurality of impedances that the switchable element (120) comprises each after the plurality of inductance values of the inductance sequence at the inductance element (110) have each been adjusted to obtain a plurality of binary encoded impedance values; or
wherein the encoder further comprises a binary mapping device (150) configured to binary encode a plurality of impedances that the switchable element (120) comprises each after the plurality of inductance values of the inductance sequence at the inductance element (110) have each been adjusted to obtain a plurality of binary encoded impedance values, wherein the encoder further comprises a channel encoder (160) configured to channel encode the plurality of the binary encoded impedance values to obtain a channel encoded signal; or
wherein the encoder further comprises a binary mapping device (150) configured to binary encode a plurality of impedances that the switchable element (120) comprises each after the plurality of inductance values of the inductance sequence at the inductance element (110) have each been adjusted to obtain a plurality of binary encoded impedance values, wherein the encoder further comprises a channel encoder (160) configured to channel encode the plurality of the binary encoded impedance values to obtain a channel encoded signal, wherein the encoder further comprises a modulator (170) configured to modulate the channel encoded signal to obtain a modulated signal.

8. System comprising:
an encoder according to one of claims 5 to 7 and
a decoder according to one of claims 1 to 4,
wherein the encoder according to one of claims 5 to 7 is configured to encode a binary data sequence and to transmit the same in encoded form to the decoder according to one of claims 1 to 4 and
wherein the decoder according to one of claims 1 to 4 is configured to decode the encoded form of the binary data sequence to decode the binary data sequence.

9. Method for decoding to obtain a binary data sequence, comprising:
generating an inductance sequence comprising a plurality of inductance values by an inductance sequence generator,
adjusting each inductance value of the plurality of inductance values of the inductance sequence at a first inductance element and at a second inductance element, wherein the first inductance element comprises an adjustable inductance and wherein the second inductance element comprises an adjustable inductance,
performing a first comparison by a first comparison unit after a current inductance value of the plurality of inductance values of the inductance sequence has been adjusted at the first inductance element, wherein the first comparison depends on a received impedance value and on an impedance that the first state element comprises when the current inductance value has been adjusted at the first inductance element,
performing a second comparison by a second comparison unit after the current inductance value of the plurality of inductance values of the inductance sequence has been adjusted at the second inductance element, wherein the second comparison depends on the received impedance value and on an impedance that the second state element comprises when the current inductance value has been adjusted at the second inductance element,
as a result of the evaluation of the received impedance value, outputting no binary value of the binary data sequence when it results from the received impedance value that no binary value of the binary data sequence is encoded with the received impedance value,
when it results from the received impedance value that a binary value of the binary data sequence is encoded with the received impedance value, as a result of the evaluation of the received impedance value, outputting a first binary value as a binary value of the binary data sequence when the first comparison provides a match,
when it results from the received impedance value that a binary value of the binary data sequence is encoded with the received impedance value, as the result of the evaluation of the received impedance value, outputting a second binary value as said one binary value of the binary data sequence that differs from the first binary value when the first comparison does not provide a match but when the second comparison does provide a match,
wherein the first state element is configured to comprise a first impedance when the first inductance element comprises an inductance with the first inductance value, and to comprise a second impedance that differs from the first impedance when the first inductance element comprises an inductance with a second inductance value that differs from the second value, and
wherein the second state element is configured to comprise a third impedance that differs from the first impedance when the second inductance element comprises an inductance with the first inductance value and to comprise a fourth impedance that differs from the second impedance and from the third impedance when the second inductance element comprises an inductance with the second inductance value.

10. Method for encoding a binary data sequence, comprising:
generating an inductance sequence comprising a plurality of inductance values by an inductance sequence generator,
adjusting each inductance value of the plurality of inductance values of the inductance sequence at an inductance element, wherein the inductance element comprises an adjustable inductance, wherein, when the inductance element comprises an inductance with the first inductance value, a switchable element comprises a first impedance when the switchable element is switched to a first state and wherein, when the inductance element comprises the inductance with the first inductance value, the switchable element comprises a second impedance that differs from the first impedance when the switchable element is switched to a second state,
wherein, when the impedance that the switchable element comprises is within a predefined impedance range after one of the inductance values of the plurality of inductance values of the inductance sequence has been adjusted, the switchable element is switched to the first state or to the second state by the control unit (140) in dependence on a binary value of the binary data sequence and
wherein the switchable element is not switched by the control unit (140) and is maintained in the first or in the second state when the impedance that the switchable element comprises is within the predefined impedance range after the one of the inductance values of the plurality of inductance values of the inductance sequence has been adjusted.

11. Method for decoding and encoding, comprising:
a method for encoding according to claim 10 and
a method for decoding according to claim 9,
wherein a binary data sequence is encoded according to the method according to claim 10 to obtain an encoded form of the binary data sequence and
wherein the encoded form of the binary data sequence is decoded according to the method according to claim 9 to decode the binary data sequence.

12. Computer program having a program code for performing the method according to one of claims 9 to 11.

13. Decoder according to one of claims 1 to 4, wherein the first state element (321) comprises a rare-earth manganate and/or wherein the second state element (322) comprises a rare-earth manganate.

14. Decoder according to one of claims 1 to 4 or according to claim 13,
wherein the first state element (321) is configured as a first non-volatile impedance switch and/or
wherein the second state element (322) is configured as a second non-volatile impedance switch; or
wherein the first state element (321) is configured as a first non-volatile impedance switch and
wherein the second state element (322) is configured as a second non-volatile impedance switch,
wherein the first state element (321) is switched to a first state and wherein the second state element (321) is switched to a second state that differs from the first state.

15. Encoder according to one of claims 5 to 7,
wherein the switchable element (120) comprises a rare-earth manganate; and/or
wherein the first state element (321) is configured as non-volatile impedance switch.

## Revendications

1. Décodeur pour décoder pour obtenir une séquence de données binaires, comprenant:
un premier élément d'inductance (311) qui présente une inductance qui est réglable,
un premier élément d'état (321) qui est conçu pour présenter, lorsque le premier élément d'inductance (311) présente une inductance avec une première valeur d'inductance, une première impédance et pour présenter, lorsque le premier élément d'inductance (311) présente une inductance avec une deuxième valeur d'inductance qui est différente de la première valeur d'inductance, une deuxième impédance qui est différente de la première impédance,
un deuxième élément d'inductance (312) qui présente une inductance qui est réglable,
un deuxième élément d'état (322) qui est conçu pour présenter, lorsque le deuxième élément d'inductance (312) présente une inductance avec la première valeur d'inductance, une troisième impédance qui est différente de la première impédance et pour présenter, lorsque le deuxième élément d'inductance (312) présente une inductance avec la deuxième valeur d'inductance, une quatrième impédance qui est différente de la deuxième impédance et de la troisième impédance,
un générateur de séquence d'inductances (330) qui est conçu pour générer une séquence d'inductances comportant une pluralité de valeurs d'inductance et pour régler chaque valeur d'inductance de la pluralité de valeurs d'inductance de la séquence d'inductances au niveau du premier élément d'inductance (311) et pour la régler au niveau du deuxième élément d'inductance (312),
une première unité de comparaison (341) qui est conçue pour effectuer une première comparaison après qu'une valeur d'inductance actuelle de la pluralité de valeurs d'inductance de la séquence d'inductances a été réglée au niveau du premier élément d'inductance (311), où la première comparaison dépend d'une valeur d'impédance reçue et dépend d'une impédance que présente le premier élément d'état (321) lorsque la valeur d'inductance actuelle a été réglée au niveau du premier élément d'inductance (311),
une deuxième unité de comparaison (342) qui est conçue pour effectuer une deuxième comparaison après que la valeur d'inductance actuelle de la pluralité de valeurs d'inductance de la séquence d'inductances a été réglée au niveau du deuxième élément d'inductance (312), où la deuxième comparaison dépend de la valeur d'impédance reçue et dépend d'une impédance que présente le deuxième élément d'état (322) lorsque la valeur d'inductance actuelle a été réglée au niveau du deuxième élément d'inductance (312),
dans lequel le décodeur est conçu pour ne pas sortir de valeur binaire de la séquence de données binaires comme résultat de l'évaluation de la valeur d'impédance reçue lorsqu'il résulte de la valeur d'impédance reçue qu'aucune valeur binaire de la séquence de données binaires n'est codée par la valeur d'impédance reçue,
dans lequel, lorsqu'il résulte de la valeur d'impédance reçue qu'une valeur binaire de la séquence de données binaires est codée par la valeur d'impédance reçue, le décodeur est conçu pour sortir, comme résultat de l'évaluation de la valeur d'impédance reçue, une première valeur binaire comme valeur binaire de la séquence de données binaires lorsque la première évaluation fournit une correspondance,
dans lequel, lorsqu'il résulte de la valeur d'impédance reçue que par la valeur d'impédance reçue est codée une valeur binaire de la séquence de données binaires, le décodeur est conçu pour sortir, comme résultat de l'évaluation de la valeur d'impédance reçue, une deuxième valeur binaire comme ladite une valeur binaire de la séquence de données binaires qui est différente de la première valeur binaire lorsque la première comparaison ne fournit pas de correspondance, mais que la deuxième comparaison fournit une correspondance.

2. Décodeur selon la revendication 1,
dans lequel le premier élément d'état présente de l'oxyde d'yttrium et de manganèse, et
dans lequel le deuxième élément d'état présente de l'oxyde d'yttrium et de manganèse.

3. Décodeur selon la revendication 1 ou 2,
dans lequel la valeur d'impédance reçue est une valeur d'impédance reçue codée par codage binaire parmi une pluralité de valeurs d'impédance codées par codage binaire,
dans lequel le décodeur comporte par ailleurs un premier codeur binaire (351) qui est conçu pour coder par codage binaire l'impédance que présente le premier élément d'état (321) lorsque la valeur d'inductance actuelle a été réglée au niveau du premier élément d'inductance (311) comme une première valeur d'impédance codée par codage binaire,
dans lequel le décodeur comporte par ailleurs un deuxième codeur binaire (352) qui est conçu pour coder par codage binaire l'impédance que présente le deuxième élément d'état (322) lorsque la valeur d'inductance actuelle a été réglée au niveau du deuxième élément d'inductance (312), comme une deuxième valeur d'impédance codée par codage binaire,
dans lequel la première unité de comparaison (341) est conçue pour effectuer la première comparaison comme une comparaison de la valeur d'impédance reçue codée par codage binaire avec la première valeur d'impédance codée par codage binaire, et
dans lequel la deuxième unité de comparaison (342) est conçue pour effectuer la deuxième comparaison comme une comparaison de la valeur d'impédance reçue codée par codage binaire avec la deuxième valeur d'impédance codée par codage binaire.

4. Décodeur selon la revendication 3,
dans lequel le décodeur comporte par ailleurs un décodeur de canal (360) qui est configuré pour décoder un signal codé par canal pour obtenir la pluralité de valeurs d'impédance codées par codage binaire; ou
dans lequel le décodeur comporte par ailleurs un décodeur de canal (360) qui est configuré pour décoder un signal codé par canal pour obtenir la pluralité de valeurs d'impédance codées par codage binaire, dans lequel le décodeur comporte par ailleurs un démodulateur (370) qui est configuré pour démoduler un signal modulé pour obtenir le signal codé par canal.

5. Codeur pour coder une séquence de données binaires, comportant:
un élément d'inductance (110) qui présente une inductance qui est réglable,
un élément commutable (120) qui est conçu pour être commuté à un premier état ou à un deuxième état, où, lorsque l'élément d'inductance (110) présente une inductance avec une première valeur d'inductance, l'élément commutable (120) présente une première impédance lorsque l'élément commutable (120) est commuté au premier état, et où, lorsque l'élément d'inductance (110) présente l'inductance avec la première valeur d'inductance, l'élément commutable (120) présente une deuxième impédance qui est différente de la première impédance lorsque l'élément commutable (120) est commuté au deuxième état,
un générateur de séquence d'inductances (130) qui est conçu pour générer une séquence d'inductances comportant une pluralité de valeurs d'inductance et pour régler chaque valeur d'inductance de la pluralité de valeurs d'inductance de la séquence d'inductances au niveau de l'élément d'inductance (110),
une unité de commande (140),
dans lequel l'unité de commande (140) est conçue pour commuter, lorsque l'impédance que présente l'élément commutable (120) se situe dans une plage d'impédance prédéfinie après que l'une des valeurs d'inductance de la pluralité de valeurs d'inductance de la séquence d'inductances a été réglée, l'élément commutable (120) en fonction d'une valeur binaire de la séquence de données binaires au premier état ou au deuxième état, et
dans lequel l'unité de commande (140) est conçue pour ne pas commuter l'élément commutable (120) et pour le laisser dans le premier ou le deuxième état lorsque l'impédance que présente l'élément commutable (120) se situe dans la plage d'impédance prédéfinie après que l'une des valeurs d'inductance de la pluralité de valeurs d'inductance de la séquence d'inductances a été réglée.

6. Codeur selon la revendication 5,
dans lequel l'élément commutable (120) présente de l'oxyde d'yttrium et de manganèse.

7. Codeur selon la revendication 5 ou 6,
dans lequel le codeur comporte par ailleurs un reproducteur binaire (150) qui est conçu pour coder par codage binaire une pluralité d'impédances que présente chaque fois l'élément commutable (120) après que la pluralité de valeurs d'inductance de la séquence d'inductances ont été réglées chacune au niveau de l'élément d'inductance (110) pour obtenir une pluralité de valeurs d'impédance codées par codage binaire; ou
dans lequel le codeur comporte par ailleurs un reproducteur binaire (150) qui est conçu pour coder par codage binaire une pluralité d'impédances que présente chaque fois l'élément commutable (120) après que la pluralité de valeurs d'inductance de la séquence d'inductances ont été réglées chacune au niveau de l'élément d'inductance (110) pour obtenir une pluralité de valeurs d'impédance codées par codage binaire, dans lequel le codeur comporte par ailleurs un codeur de canal (160) qui est configuré pour coder par canal la pluralité de valeurs d'impédance codées par codage binaire pour obtenir un signal codé par canal; ou
dans lequel le codeur comporte par ailleurs un reproducteur binaire (150) qui est conçu pour coder par codage binaire une pluralité d'impédances que présente chaque fois l'élément commutable (120) après que la pluralité de valeurs d'inductance de la séquence d'inductances ont été réglées chacune au niveau de l'élément d'inductance (110) pour obtenir une pluralité de valeurs d'impédance codées par codage binaire, dans lequel le codeur comporte par ailleurs un codeur de canal (160) qui est conçu pour coder par canal la pluralité de valeurs d'impédance codées par codage binaire pour obtenir un signal codé par canal, dans lequel le codeur comporte par ailleurs un modulateur (170) qui est conçu pour moduler le signal codé par canal pour obtenir un signal modulé.

8. Système, comportant:
un codeur selon l'une des revendications 5 à 7, et
un décodeur selon l'une des revendications 1 à 4,
dans lequel le codeur selon l'une des revendications 5 à 7 est conçu pour coder une séquence de données binaires et la transmettre sous forme codée au décodeur selon l'une des revendications 1 à 4, et
dans lequel le décodeur selon l'une des revendications 1 à 4 est conçu pour décoder la forme codée de la séquence de données binaires pour décoder la séquence de données binaires.

9. Procédé de décodage pour obtenir une séquence de données binaires, comprenant le fait de:
générer une séquence d'inductances comportant une pluralité de valeurs d'inductance par un générateur de séquence d'inductances,
régler chaque valeur d'inductance de la pluralité de valeurs d'inductance de la séquence d'inductances au niveau d'un premier élément d'inductance et d'un deuxième élément d'inductance, où le premier élément d'inductance présente une inductance qui est réglable, et le deuxième élément d'inductance présente une inductance qui est réglable,
effectuer une première comparaison par une première unité de comparaison après qu'une valeur d'inductance actuelle de la pluralité de valeurs d'inductance de la séquence d'inductances a été réglée au niveau du premier élément d'inductance, où la première comparaison dépend d'une valeur d'impédance reçue et dépend d'une impédance que présente un premier élément d'état lorsque la valeur d'inductance actuelle a été réglée au niveau du premier élément d'inductance,
effectuer une deuxième comparaison par une deuxième unité de comparaison après que la valeur d'inductance actuelle de la pluralité de valeurs d'inductance de la séquence d'inductances a été réglée au niveau du deuxième élément d'inductance, où la deuxième comparaison dépend de la valeur d'impédance reçue et dépend d'une impédance que présente un deuxième élément d'état lorsque la valeur d'inductance actuelle a été réglée au niveau du deuxième élément d'inductance,
comme résultat de l'évaluation de la valeur d'impédance reçue, ne pas sortir une valeur binaire de la séquence de données binaires lorsqu'il résulte de la valeur d'impédance reçue qu'aucune valeur binaire de la séquence de données binaires n'est codée par la valeur d'impédance reçue,
lorsqu'il résulte de la valeur d'impédance reçue qu'une valeur binaire de la séquence de données binaires est codée par la valeur d'impédance reçue, sortir, comme résultat de l'évaluation de la valeur d'impédance reçue, une première valeur binaire comme une valeur binaire de la séquence de données binaires lorsque la première comparaison fournit une correspondance, et
lorsqu'il résulte de la valeur d'impédance reçue qu'une valeur binaire de la séquence de données binaires est codée par la valeur d'impédance reçue, sortir, comme résultat de l'évaluation de la valeur d'impédance reçue, une deuxième valeur binaire comme ladite une valeur binaire de la séquence de données binaires qui est différente de la première valeur binaire lorsque la première comparaison ne fournit pas de correspondance, mais que la deuxième comparaison fournit toutefois une correspondance,
dans lequel le premier élément d'état est configuré pour présenter, lorsque le premier élément d'inductance présente une inductance avec une première valeur d'inductance, une première impédance et pour présenter, lorsque le premier élément d'inductance présente une inductance avec une deuxième valeur d'inductance qui est différente de la première inductance valeur, une deuxième impédance qui est différente de la première impédance, et
dans lequel le deuxième élément d'état est configuré pour présenter, lorsque le deuxième élément d'inductance présente une inductance avec la première valeur d'inductance, une troisième impédance qui est différente de la première impédance et pour présenter, lorsque le deuxième élément d'inductance présente une inductance avec la deuxième valeur d'inductance, une quatrième impédance qui est différente de la deuxième impédance et de la troisième impédance.

10. Procédé de codage d'une séquence de données binaires, comprenant le fait de:
générer une séquence d'inductances comportant une pluralité de valeurs d'inductance par un générateur de séquence d'inductances,
régler chaque valeur d'inductance de la pluralité de valeurs d'inductance de la séquence d'inductances au niveau d'un élément d'inductance, où l'élément d'inductance présente une inductance qui est réglable, où, lorsque l'élément d'inductance présente une inductance avec une première valeur d'inductance, un élément commutable présente une première impédance lorsque l'élément commutable est commuté à un premier état, et où, lorsque l'élément d'inductance présente l'inductance avec la première valeur d'inductance, l'élément commutable présente une deuxième impédance qui est différente de la première impédance lorsque l'élément commutable est commuté à un deuxième état,
dans lequel, lorsque l'impédance qui présente un élément commutable se situe dans une plage d'impédances prédéfinie après qu'une des valeurs d'inductance de la pluralité de valeurs d'inductance de la séquence d'inductances a été réglée, l'élément commutable est commuté par l'unité de commande (140) en fonction d'une valeur binaire de la séquence de données binaires au premier état ou au deuxième état, et
dans lequel l'élément commutable n'est pas commuté par l'unité de commande (140) et est laissé dans le premier ou dans le deuxième état lorsque l'impédance que présente l'élément commutable se situe dans la plage d'impédances prédéfinie après que l'une des valeurs d'inductance de la pluralité de valeurs d'inductance de la séquence d'inductance a été réglée.

11. Procédé de décodage et de codage, comprenant:
un procédé de codage selon la revendication 10, et
un procédé de décodage selon la revendication 9,
dans lequel une séquence de données binaires est codée selon le procédé selon la revendication 10 pour obtenir une forme codée de la séquence de données binaires, et
dans lequel la forme codée de la séquence de données binaires est décodée selon le procédé selon la revendication 9 pour décoder la séquence de données binaires.

12. Programme d'ordinateur avec un code programme pour mettre en oeuvre le procédé selon l'une des revendications 9 à 11.

13. Décodeur selon l'une des revendications 1 à 4,
dans lequel le premier élément d'état (321) présente un manganate de terres rares, et/ou dans lequel le deuxième élément d'état (322) présente un manganate de terres rares.

14. Décodeur selon l'une des revendications 1 à 4 ou selon la revendication 13,
dans lequel le premier élément d'état (321) est conçu comme un premier commutateur d'impédance non volatile, et/ou dans lequel le deuxième élément d'état (322) est conçu comme un deuxième commutateur d'impédance non volatile; ou
dans lequel le premier élément d'état (321) est conçu comme un premier commutateur d'impédance non volatile, et dans lequel le deuxième élément d'état (322) est conçu comme un deuxième commutateur d'impédance non volatile, dans lequel le premier élément d'état (321) est commuté à un premier état, et dans lequel le deuxième élément d'état (321) est commuté à un deuxième état qui est différent du premier état.

15. Codeur selon l'une des revendications 5 à 7,
dans lequel l'élément commutable (120) présente un manganate de terres rares; et/ou
dans lequel le premier élément d'état (321) est conçu comme un commutateur d'impédance non volatile.
